(19) Europäisches Patentamt
European Patent Office
Office européen des brevets

(11) **EP 4 716 341 A1**

(12) **EUROPEAN PATENT APPLICATION**
published in accordance with Art. 153(4) EPC

(43) Date of publication:
**25.03.2026 Bulletin 2026/13**

(21) Application number: **24822221.8**

(22) Date of filing: **29.01.2024**

(51) International Patent Classification (IPC):
**H04W 72/0453** (2023.01)

(52) Cooperative Patent Classification (CPC):
**H04W 72/0453**

(86) International application number:
**PCT/CN2024/074451**

(87) International publication number:
**WO 2024/255260 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.06.2023 RU 2023115432**

(71) Applicant: **Huawei Technologies Co., Ltd.
Shenzhen, Guangdong 518129 (CN)**

(72) Inventors:
• **HU, Yuanzhou
Shenzhen, Guangdong 518129 (CN)**
• **WANG, Fan
Shenzhen, Guangdong 518129 (CN)**
• **MA, Jianglei
Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD AND COMMUNICATION APPARATUS**

(57)    A communication method includes: determining a first frequency resource corresponding to first data, and sending the first data on the first frequency resource, where the first frequency resource is a frequency resource in a first frequency resource set, the first frequency resource set includes $N_f$ frequency resources, any two of the $N_f$ frequency resources are different, a bandwidth of an overlapping frequency resource between at least two of the $N_f$ frequency resources is greater than 0, a bandwidth of an overlapping frequency resource between any two of the $N_f$ frequency resources is less than or equal to a first threshold, and $N_f$ is an integer greater than or equal to 2. According to the method, mutual interference between a plurality of sending devices that is caused when the plurality of sending devices simultaneously transmit data can be reduced. In addition, more frequency resources are designed to support more sending devices, to achieve higher flexibility.

300

| Sending device | | Receiving device |

S310: Determine a first frequency resource corresponding to first data

S320: Determine the first frequency resource

S330: Send the first data on the first frequency resource

FIG. 3

## Description

This application claims priority to Russian Patent Application No. 2023115432, filed with the Federal Service for Intellectual Property on June 13, 2023 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

In a grant free (grant free) system, a plurality of terminal devices select a part of shared time-frequency resources to send data. Time-frequency resources selected by different terminals may completely or partially overlap, causing interference in a data transmission process, and affecting data demodulation performance of a base station. Especially in a large-scale access scenario, there are a large quantity of access devices (terminal devices), and there is a higher probability that time-frequency resources selected by different terminal devices overlap, affecting system transmission performance and demodulation performance.

## SUMMARY

Embodiments of this application provide a communication method and a communication device, to reduce interference caused when a sending device transmits data, and support access scenarios with different quantities of sending devices, thereby achieving higher flexibility.

According to a first aspect, a communication method is provided. The method may be performed by a sending device, or may be performed by a chip or a circuit used for the sending device. This is not limited in this application. For ease of description, the following uses an example in which the sending device performs the method for description.

The method includes: determining a first frequency resource corresponding to first data, where the first frequency resource is a frequency resource in a first frequency resource set, the first frequency resource set includes $N_f$ frequency resources, any two of the $N_f$ frequency resources are different, a bandwidth of an overlapping frequency resource between at least two of the $N_f$ frequency resources is greater than 0, a bandwidth of an overlapping frequency resource between any two of the $N_f$ frequency resources is less than or equal to a first threshold, and $N_f$ is an integer greater than or equal to 2; and sending the first data on the first frequency resource.

For example, that any two of the $N_f$ frequency resources are different may be understood as that any two of the $N_f$ frequency resources partially overlap, or any two of the $N_f$ frequency resources do not overlap at all. It may be understood that, that two frequency resources are the same means that the two frequency resources absolutely overlap (or completely overlap), and a time domain resource and a frequency domain resource of the two frequency resources are the same.

In this embodiment of this application, if two frequency resources partially or completely overlap, it may be referred to that the two frequency resources are non-orthogonal; or if two frequency resources do not overlap at all, it may be referred to that the two frequency resources are orthogonal.

For example, that the bandwidth of the overlapping frequency resource between the at least two of the $N_f$ frequency resources is greater than 0 may be understood as that the at least two of the $N_f$ frequency resources are non-orthogonal. In other words, the at least two of the $N_f$ frequency resources overlap.

For example, that the bandwidth of the overlapping frequency resource between any two of the $N_f$ frequency resources is less than or equal to the first threshold includes: A bandwidth of an overlapping frequency resource between any one of Q frequency resources of the $N_f$ frequency resources and remaining Q-1 frequency resources is less than or equal to the first threshold. Specifically, if Q is equal to 2, a bandwidth of an overlapping frequency resource between one frequency resource and another frequency resource is less than or equal to the first threshold. For another example, if Q is greater than 2, a sum of bandwidths of overlapping frequency resources between any one of the Q frequency resources and remaining Q-1 frequency resources is less than or equal to the first threshold.

According to the solution provided in this application, at least two of the $N_f$ frequency resources are designed to be non-orthogonal. Compared with a case in which different frequency resources are orthogonal, this case brings more degrees of freedom, so that more frequency resources can be designed, to meet access scenarios of different quantities of sending devices. In addition, an overlapping bandwidth of any two of the $N_f$ frequency resources is designed to be less than or equal to the first threshold, to reduce interference during data transmission between different sending devices as much as possible, and ensure system transmission performance and demodulation performance of a receiving device. In addition, corresponding to different values of the first threshold, different quantities of frequency resources may be designed to meet access scenarios of different quantities of sending devices.

With reference to the first aspect, in some implementations of the first aspect, that any two of the $N_f$ frequency resources are different includes: Any two of the $N_f$ frequency resources partially overlap; or any two of the $N_f$ frequency resources do not overlap at all.

Based on this implementation, it is designed that bandwidths of any two of the $N_f$ frequency resources partially overlap or do not overlap at all, so that interference during data transmission between sending devices can be reduced, more frequency resources are provided as much as possible, and access scenarios of more sending devices are supported.

With reference to the first aspect, in some implementations of the first aspect, that the bandwidth of the overlapping frequency resource between any two of the $N_f$ frequency resources is less than or equal to the first threshold includes: A sum of bandwidths of overlapping frequency resources between any one of Q frequency resources and remaining Q-1 frequency resources is less than or equal to the first threshold, where the Q frequency resources are included in the $N_f$ frequency resources, Q is an integer, and $2 \leq Q \leq N_f$.

Based on this implementation, for an overlapping degree between different frequency resources in the frequency resource set, different quantities of frequency resources may be designed based on different overlapping degrees, to adapt to scenarios with different quantities of access devices.

With reference to the first aspect, in some implementations of the first aspect, the first threshold is less than a bandwidth of the first data.

Based on this implementation, the first threshold is set to be less than the bandwidth of the first data, so that a sum of overlapping bandwidths between different frequency resources is as small as possible, and interference to the transmission of the first data is reduced.

With reference to the first aspect, in some implementations of the first aspect, determining the first frequency resource corresponding to the first data includes: determining a first frequency position index; and determining the first frequency resource in the first frequency resource set based on the first frequency position index.

Based on this implementation, the first frequency position may be determined by determining the first frequency position index, and the first frequency position corresponds to the first frequency resource, so that the first frequency resource may be determined in the first frequency resource set.

With reference to the first aspect, in some implementations of the first aspect, the method further includes: determining the first frequency resource set and/or a first frequency position set.

With reference to the first aspect, in some implementations of the first aspect, determining the first frequency resource set includes: determining a first frequency resource set index; and determining the first frequency resource set from N frequency resource sets based on the first frequency resource set index, where N is an integer greater than 1.

Based on this implementation, the N frequency resource sets one-to-one correspond to the N frequency resource set indexes, and the first frequency resource set may be determined from the N frequency resource sets by determining the first frequency resource set index.

With reference to the first aspect, in some implementations of the first aspect, the first frequency resource set corresponds to a first frequency position set, the first frequency position set includes $N_f$ frequency positions, and the Nr frequency positions one-to-one correspond to the $N_f$ frequency resources. Determining the first frequency resource in the first frequency resource set based on the first frequency position index includes: determining a first frequency position in the first frequency position set based on the first frequency position index; and determining the first frequency resource based on the first frequency position.

Based on this implementation, a plurality of frequency positions included in the first frequency position set one-to-one correspond to a plurality of frequency position indexes, the first frequency position may be determined from the plurality of frequency positions based on the first frequency position index, and the first frequency resource may be further determined.

With reference to the first aspect, in some implementations of the first aspect, the first frequency resource set and/or the first frequency position set are/is associated with a first parameter, and the first parameter includes one or more of the following: a bandwidth of a shared frequency resource, the bandwidth of the first data, the first threshold, a quantity K of clusters of data included in the first data, the quantity $N_f$ of frequency resources included in the first frequency resource set, or Q, where the first threshold indicates an upper limit of a sum of bandwidths of overlapping frequency resources between the Q frequency resources.

Optionally, the first threshold may be referred to as a maximum overlapping bandwidth, and the maximum overlapping bandwidth indicates the upper limit of the sum of the bandwidths of the overlapping frequency resources between the Q frequency resources.

Optionally, the upper limit of the sum of the bandwidths of the overlapping frequency resources between the Q frequency resources indicates an upper limit of a sum of bandwidths of overlapping frequency resources between any one of the Q frequency resources and remaining Q-1 frequency resources.

Optionally, when Q=2, the maximum overlapping bandwidth indicates an upper limit of a bandwidth of an overlapping frequency resource between two frequency resources.

Based on this implementation, a smaller maximum overlapping bandwidth indicates a stronger constraint. In other words, a smaller sum of overlapping bandwidths between different frequency positions in the frequency position set indicates a smaller quantity of frequency positions in the corresponding frequency position set. Different frequency position sets corresponding to different maximum overlapping bandwidths may be designed for different quantities of sending devices and different interference requirements between a plurality of sending devices.

Based on this implementation, for a maximum overlapping bandwidth, a larger value of Q indicates a stronger constraint. In other words, a larger quantity Q of frequency resources corresponding to the maximum overlapping bandwidth indicates a smaller quantity of frequency positions in a corresponding frequency position set. Different frequency position sets corresponding to different values of Q may be designed for different quantities of sending devices and different interference requirements between a plurality of sending devices.

With reference to the first aspect, in some implementations of the first aspect, the method further includes: determining the first frequency resource set and/or the first frequency position set.

With reference to the first aspect, in some implementations of the first aspect, the first frequency resource set and/or the first frequency position set are/is associated with the bandwidth of the shared frequency resource and the bandwidth of the first data. Determining the first frequency resource set and/or the first frequency position set includes: determining the first frequency resource set and/or the first frequency position set based on a ratio of the bandwidth of the shared frequency resource to the bandwidth of the first data.

Based on this implementation, a larger ratio of the bandwidth of the shared frequency resource to the bandwidth of the first data indicates a larger quantity of frequency positions that can be designed in the first frequency position set. In addition, different frequency position sets are designed for different ratios, to adapt to scenarios with various bandwidths of the shared frequency resource and various bandwidths of the first data.

With reference to the first aspect, in some implementations of the first aspect, the first frequency resource set and/or the first frequency position set are/is associated with K. K satisfies: $K \leq P \leq N_{ratio}$, where $N_{ratio}$ represents the ratio of the bandwidth of the shared frequency resource to the bandwidth of the first data, and P represents a maximum prime number less than or equal to $N_{ratio}$.

Optionally, P may alternatively represent a prime number less than or equal to $N_{ratio}$. This is not limited in this application.

Based on this implementation, for the ratio $N_{ratio}$ of the bandwidth of the shared frequency resource to the bandwidth of the first data, a design degree of freedom may be increased by increasing a quantity of clusters of data, to design more quantities of frequency positions included in the frequency position set. Different frequency position sets corresponding to different maximum overlapping bandwidths may be designed for different quantities of sending devices and different interference requirements between a plurality of sending devices.

With reference to the first aspect, in some implementations of the first aspect, the shared frequency resource includes P * K sub-blocks, the first data includes K clusters of data, bandwidths of any two of the K clusters of data are the same, and a bandwidth of each sub-block is the same as a bandwidth of each cluster of data. The first frequency resource includes K clusters of frequency resources, the first frequency position includes K clusters of frequency positions, the K clusters of frequency resources one-to-one correspond to the K clusters of frequency positions, and the K clusters of frequency positions are positions of K sub-blocks in the P* K sub-blocks.

With reference to the first aspect, in some implementations of the first aspect, the method further includes: determining the P * K sub-blocks from the shared frequency resource based on a first index sequence.

With reference to the first aspect, in some implementations of the first aspect, the first frequency position set $S_{set}$ satisfies:

$$S_{set} = \{S_0, \dots, S_{N_f-1}\}.$$

Optionally, the $N_f$ frequency positions in the first frequency position set $S_{set}$ may be arranged in any order.

$S_m$ represents an $m^{th}$ frequency position in the first frequency position set $S_{set}$, $m = 0, \dots, N_f - 1$, $S_m(k)$ represents a $k^{th}$ cluster of frequency positions in the $m^{th}$ frequency position, $k = 0, \dots, K - 1$, and $S_m(k)$ is related to the bandwidth of the shared frequency resource, the bandwidth of the first data, the first threshold, and the quantity K of clusters of data included in the first data.

With reference to the first aspect, in some implementations of the first aspect, a $k^{th}$ cluster of frequency positions $S_{\sum_{l=0}^{L}(P^l * i_l)}(k)$ in a $\sum_{l=0}^{L}(P^l * i_l)^{th}$ frequency position in the first frequency position set $S_{set}$ satisfies:

$$S_{\sum_{l=0}^{L}(P^l * i_l)}(k) = k * P + \left(\sum_{l=0}^{L}(k^l * i_l)\right) \bmod P,$$

or

$$X_{\sum_{l=0}^{L}(P^l*i_l)}(k) = k*P + (\sum_{l=0}^{L}(k^l*i_l)) \bmod P,$$

and

$$S_{\sum_{l=0}^{L}(P^l*i_l)}(k) = Y\left(X_{\sum_{l=0}^{L}(P^l*i_l)}(k)\right),$$

or

$$S_{\sum_{l=0}^{L}(P^l*i_l)}(k) = k*P + (\sum_{l=0}^{L}(k^l*i_l) + \Delta_1) \bmod P,$$

or

$$S_{\sum_{l=0}^{L}(P^l*i_l)}(k) = k*P + (\sum_{l=0}^{L}\Delta_2(k^l*i_l)) \bmod P,$$

or

$$S_{\sum_{l=0}^{L}(P^l*i_l)}(k) = k*P + (\sum_{l=0}^{L}\Delta_2(k^l*i_l) + \Delta_1) \bmod P,$$

where
the $k^{th}$ cluster of frequency positions corresponds to a $k^{th}$ cluster of data in the K clusters of data included in the first data, P represents the maximum prime number less than or equal to the ratio $N_{ratio}$ of the bandwidth of the shared frequency resource to the bandwidth of the first data, L represents a ratio of the first threshold to a bandwidth of each cluster of data in the K clusters of data, K represents the quantity of clusters of data included in the first data, *L* is an integer and $0 \le L \le K-1$, $i_l = 0, ..., P-1$, $N_f = P^{L+1}$, $k = 0, ..., K-1$, Y includes P * K elements, a value of any one of the P * K elements is one of 0 to P * K - 1, values of any two of the P * K elements are different, and $\Delta_1$ and $\Delta_2$ are offsets and may be predefined or indicated by signaling. Optionally, $\Delta_1$ and $\Delta_2$ are integers.

It should be understood that $Y\left(X_{\sum_{l=0}^{L}(P^l*i_l)}(k)\right)$ represents an $X_{\sum_{l=0}^{L}(P^l*i_l)}(k)^{th}$ element in a sequence Y, and $X_{\sum_{l=0}^{L}(P^l*i_l)}(k)$ is used as an index of the sequence Y, and is used to determine the $k^{th}$ cluster of frequency positions in the $\sum_{l=0}^{L}(P^l*i_l)^{th}$ frequency position.

With reference to the first aspect, in some implementations of the first aspect, the method further includes: determining to enable frequency hopping; determining a frequency position index of a second frequency resource based on an identifier of a sending device, where the second frequency resource and the first frequency resource are in different time units; and sending the first data on the second frequency resource.

With reference to the first aspect, in some implementations of the first aspect, determining the frequency position index of the second frequency resource based on the identifier of the sending device includes: determining the frequency position index of the second frequency resource based on the identifier of the sending device and a time unit in which the second frequency resource is located; or determining the frequency position index of the second frequency resource based on a pseudo-random sequence, where the pseudo-random sequence is a Gold (Gold) sequence or an m sequence, and initialization of the pseudo-random sequence is determined based on the identifier of the sending device.

Based on this implementation, after determining the first frequency resource, for different transmission moments, the sending device may determine the second frequency resource based on the identifier of the sending device or the pseudo-random sequence, that is, select different frequency resources in a frequency hopping manner to transmit the first data, to randomize data interference between the sending devices.

According to a second aspect, a communication method is provided. The method may be performed by a receiving device, or may be performed by a chip or a circuit used for the receiving device. This is not limited in this application. For ease of description, the following uses an example in which the receiving device performs the method for description.

The method includes: determining a first frequency resource, where the first frequency resource is a frequency resource in a first frequency resource set, the first frequency resource set includes $N_f$ frequency resources, any two of the $N_f$ frequency resources are different, a bandwidth of an overlapping frequency resource between at least two of the $N_f$ frequency resources is greater than 0, a bandwidth of an overlapping frequency resource between any two of the $N_f$ frequency resources is less than or equal to a first threshold, and $N_f$ is an integer greater than or equal to 2; and receiving the first data on the first frequency resource.

According to the solution provided in this application, at least two of the $N_f$ frequency resources are designed to be non-orthogonal. Compared with a case in which different frequency resources are orthogonal, this case brings more degrees of freedom, so that more frequency resources can be designed, to meet access scenarios of different quantities of sending devices. In addition, an overlapping bandwidth of any two of the $N_f$ frequency resources is designed to be less than or equal to the first threshold, to reduce interference during data transmission between different sending devices as much as possible, and ensure system transmission performance and demodulation performance of a receiving device. In addition, corresponding to different values of the first threshold, different quantities of frequency resources may be designed to meet access scenarios of different quantities of sending devices.

With reference to the second aspect, in some implementations of the second aspect, the method further includes: sending a first frequency resource set index, where the first frequency resource set index is used to determine the first frequency resource set from N frequency resource sets, and N is an integer greater than 1.

With reference to the second aspect, in some implementations of the second aspect, the method further includes: sending a first frequency position index, where the first frequency position index is used to determine the first frequency resource in the first frequency resource set.

With reference to the second aspect, in some implementations of the second aspect, that any two of the $N_f$ frequency resources are different includes: Any two of the $N_f$ frequency resources partially overlap; or any two of the $N_f$ frequency resources do not overlap at all.

With reference to the second aspect, in some implementations of the second aspect, that the bandwidth of the overlapping frequency resource between any two of the $N_f$ frequency resources is less than or equal to the first threshold includes: A sum of bandwidths of overlapping frequency resources between any one of Q frequency resources and remaining Q-1 frequency resources is less than or equal to the first threshold, where the Q frequency resources are included in the Nr frequency resources, Q is an integer, and $2 \leq Q \leq N_f$.

With reference to the second aspect, in some implementations of the second aspect, the first threshold is less than a bandwidth of the first data.

With reference to the second aspect, in some implementations of the second aspect, the first frequency resource set corresponds to a first frequency position set, the first frequency position set includes $N_f$ frequency positions, and the $N_f$ frequency positions one-to-one correspond to the $N_f$ frequency resources; and the first frequency resource set and/or the first frequency position set are/is associated with a first parameter, and the first parameter includes one or more of the following: a bandwidth of a shared frequency resource, the bandwidth of the first data, the first threshold, a quantity K of clusters of data included in the first data, the quantity $N_f$ of frequency resources included in the first frequency resource set, or Q, where the first threshold indicates an upper limit of a sum of bandwidths of overlapping frequency resources between the Q frequency resources.

With reference to the second aspect, in some implementations of the second aspect, the first frequency resource set and/or the first frequency position set are/is associated with the bandwidth of the shared frequency resource and the bandwidth of the first data; and a ratio of the bandwidth of the shared frequency resource to the bandwidth of the first data is used to determine the first frequency resource set and/or the first frequency position set.

With reference to the second aspect, in some implementations of the second aspect, the first frequency resource set and/or the first frequency position set are/is associated with K; and K satisfies: $K \leq P \leq N_{ratio}$, where $N_{ratio}$ represents the ratio of the bandwidth of the shared frequency resource to the bandwidth of the first data, and P represents a maximum prime number less than or equal to $N_{ratio}$.

With reference to the second aspect, in some implementations of the second aspect, the shared frequency resource includes P * K sub-blocks, the first data includes K clusters of data, bandwidths of any two of the K clusters of data are the same, and a bandwidth of each sub-block is the same as a bandwidth of each cluster of data; and the first frequency resource includes K clusters of frequency resources, the K clusters of frequency resources one-to-one correspond to K clusters of frequency positions, and the K clusters of frequency positions are positions of K sub-blocks in the P* K sub-blocks.

With reference to the second aspect, in some implementations of the second aspect, the first frequency position set $S_{set}$ satisfies:

$$S_{set} = \{S_0, \dots, S_{N_f-1}\},$$

where

$S_m$ represents an $m^{th}$ frequency position in the first frequency position set $S_{set}$, $m = 0, \ldots, N_f - 1$, $S_m(k)$ represents a $k^{th}$ cluster of frequency positions in the $m^{th}$ frequency position, $k = 0, \ldots, K - 1$, and $S_m(k)$ is related to the bandwidth of the shared frequency resource, the bandwidth of the first data, the first threshold, and the quantity K of clusters of data included in the first data.

With reference to the second aspect, in some implementations of the second aspect, a $k^{th}$ cluster of frequency positions $S_{\sum_{l=0}^{L}(P^{l*}i_l)}(k)$ in a $\sum_{l=0}^{L}(P^l * i_l)^{th}$ frequency position in the first frequency position set $S_{set}$ satisfies:

$$S_{\sum_{l=0}^{L}(P^l * i_l)}(k) = k * P + \left(\sum_{l=0}^{L}(k^l * i_l)\right) \bmod P,$$

or

$$X_{\sum_{l=0}^{L}(P^l * i_l)}(k) = k * P + \left(\sum_{l=0}^{L}(k^l * i_l)\right) \bmod P,$$

and

$$S_{\sum_{l=0}^{L}(P^l * i_l)}(k) = Y\left(X_{\sum_{l=0}^{L}(P^l * i_l)}(k)\right),$$

or

$$S_{\sum_{l=0}^{L}(P^l * i_l)}(k) = k * P + \left(\sum_{l=0}^{L}(k^l * i_l) + \Delta_1\right) \bmod P,$$

or

$$S_{\sum_{l=0}^{L} P^l i_l}(k) = k * P + \left(\sum_{l=0}^{L} \Delta_2 (k^l * i_l)\right) \bmod P,$$

or

$$S_{\sum_{l=0}^{L} P^l i_l}(k) = k * P + \left(\sum_{l=0}^{L} \Delta_2 (k^l * i_l) + \Delta_1\right) \bmod P,$$

where

the $k^{th}$ cluster of frequency positions corresponds to a $k^{th}$ cluster of data in the K clusters of data included in the first data, P represents the maximum prime number less than or equal to the ratio $N_{ratio}$ of the bandwidth of the shared frequency resource to the bandwidth of the first data, L represents a ratio of the first threshold to a bandwidth of each cluster of data in the K clusters of data, K represents the quantity of clusters of data included in the first data, $L$ is an integer and $0 \leq L \leq K - 1$, $i_l = 0, \ldots, P - 1$, $N_f = P^{L+1}$, $k = 0, \ldots, K - 1$, Y includes P * K elements, a value of any one of the P * K elements is one of 0 to P * K - 1, values of any two of the P * K elements are different, and $\Delta_1$ and $\Delta_2$ are offsets and may be predefined or indicated by signaling. Optionally, $\Delta_1$ and $\Delta_2$ are integers.

For beneficial effect of the second aspect and some implementations of the second aspect, correspondingly refer to the related descriptions of the first aspect. Details are not described herein again.

According to a third aspect, a communication apparatus is provided, including: a processing unit, configured to determine a first frequency resource corresponding to first data, where the first frequency resource is a frequency resource in a first frequency resource set, the first frequency resource set includes $N_f$ frequency resources, any two of the $N_f$ frequency resources are different, a bandwidth of an overlapping frequency resource between at least two of the $N_f$ frequency resources is greater than 0, a bandwidth of an overlapping frequency resource between any two of the $N_f$ frequency resources is less than or equal to a first threshold, and $N_f$ is an integer greater than or equal to 2; and a transceiver unit, configured to send the first data on the first frequency resource.

With reference to the third aspect, in some implementations of the third aspect, that any two of the $N_f$ frequency resources are different includes: Any two of the $N_f$ frequency resources partially overlap; or any two of the $N_f$ frequency resources do not overlap at all.

With reference to the third aspect, in some implementations of the third aspect, that the bandwidth of the overlapping frequency resource between any two of the $N_f$ frequency resources is less than or equal to the first threshold includes: A sum of bandwidths of overlapping frequency resources between any one of Q frequency resources and remaining Q-1 frequency resources is less than or equal to the first threshold, where the Q frequency resources are included in the $N_f$ frequency resources, Q is an integer, and $2 \leq Q \leq N_f$.

With reference to the third aspect, in some implementations of the third aspect, the first threshold is less than a bandwidth of the first data.

With reference to the third aspect, in some implementations of the third aspect, the processing unit is further configured to: determine a first frequency position index; and determine the first frequency resource in the first frequency resource set based on the first frequency position index.

With reference to the third aspect, in some implementations of the third aspect, the processing unit is further configured to determine the first frequency resource set.

With reference to the third aspect, in some implementations of the third aspect, the processing unit is further configured to: determine a first frequency resource set index; and determine the first frequency resource set from N frequency resource sets based on the first frequency resource set index, where N is an integer greater than 1.

With reference to the third aspect, in some implementations of the third aspect, the first frequency resource set corresponds to a first frequency position set, the first frequency position set includes $N_f$ frequency positions, and the Nr frequency positions one-to-one correspond to the $N_f$ frequency resources. The processing unit is further configured to: determine a first frequency position in the first frequency position set based on the first frequency position index; and determine the first frequency resource based on the first frequency position.

With reference to the third aspect, in some implementations of the third aspect, the first frequency resource set and/or the first frequency position set are/is associated with a first parameter, and the first parameter includes one or more of the following: a bandwidth of a shared frequency resource, the bandwidth of the first data, the first threshold, a quantity K of clusters of data included in the first data, the quantity $N_f$ of frequency resources included in the first frequency resource set, or Q, where the first threshold indicates an upper limit of a sum of bandwidths of overlapping frequency resources between the Q frequency resources.

With reference to the third aspect, in some implementations of the third aspect, the processing unit is further configured to determine the first frequency resource set and/or the first frequency position set.

With reference to the third aspect, in some implementations of the third aspect, the first frequency resource set and/or the first frequency position set are/is associated with the bandwidth of the shared frequency resource and the bandwidth of the first data; and the processing unit is further configured to determine the first frequency resource set and/or the first frequency position set based on a ratio of the bandwidth of the shared frequency resource to the bandwidth of the first data.

With reference to the third aspect, in some implementations of the third aspect, the first frequency resource set and/or the first frequency position set are/is associated with K. K satisfies: $K \leq P \leq N_{ratio}$, where $N_{ratio}$ represents the ratio of the bandwidth of the shared frequency resource to the bandwidth of the first data, and P represents a maximum prime number less than or equal to $N_{ratio}$.

With reference to the third aspect, in some implementations of the third aspect, the shared frequency resource includes P * K sub-blocks, the first data includes K clusters of data, bandwidths of any two of the K clusters of data are the same, and a bandwidth of each sub-block is the same as a bandwidth of each cluster of data. The first frequency resource includes K clusters of frequency resources, the first frequency position includes K clusters of frequency positions, the K clusters of frequency resources one-to-one correspond to the K clusters of frequency positions, and the K clusters of frequency positions are positions of K sub-blocks in the P* K sub-blocks.

With reference to the third aspect, in some implementations of the third aspect, the processing unit is further configured to determine the P * K sub-blocks from the shared frequency resource based on a first index sequence.

With reference to the third aspect, in some implementations of the third aspect, the first frequency position set $S_{set}$ satisfies:

$$S_{set} = \{S_0, ..., S_{N_f-1}\},$$

where

$S_m$ represents an $m^{th}$ frequency position in the first frequency position set $S_{set}$, $m = 0, ... , N_f - 1$, $S_m(k)$ represents a $k^{th}$ cluster of frequency positions in the $m^{th}$ frequency position, $k = 0, ..., K - 1$, and $S_m(k)$ is related to the bandwidth of the shared frequency resource, the bandwidth of the first data, the first threshold, and the quantity K of clusters of data included in the first data.

With reference to the third aspect, in some implementations of the third aspect, a $k^{th}$ cluster of frequency positions $S_{\sum_{l=0}^{L} P^l i_l}(k)$ in a $\sum_{l=0}^{L}(P^l * i_l)^{th}$ frequency position in the first frequency position set $S_{set}$ satisfies:

$$S_{\sum_{l=0}^{L}(P^l * i_l)}(k) = k * P + (\sum_{l=0}^{L}(k^l * i_l)) \bmod P,$$

or

$$X_{\sum_{l=0}^{L}(P^l * i_l)}(k) = k * P + (\sum_{l=0}^{L}(k^l * i_l)) \bmod P,$$

and

$$S_{\sum_{l=0}^{L}(P^l * i_l)}(k) = Y\left(X_{\sum_{l=0}^{L}(P^l * i_l)}(k)\right),$$

or

$$S_{\sum_{l=0}^{L}(P^l * i_l)}(k) = k * P + (\sum_{l=0}^{L}(k^l * i_l) + \Delta_1) \bmod P,$$

or

$$S_{\sum_{l=0}^{L}(P^l * i_l)}(k) = k * P + (\sum_{l=0}^{L}\Delta_2(k^l * i_l)) \bmod P,$$

or

$$S_{\sum_{l=0}^{L}(P^l * i_l)}(k) = k * P + (\sum_{l=0}^{L}\Delta_2(k^l * i_l) + \Delta_1) \bmod P,$$

where
the $k^{th}$ cluster of frequency positions corresponds to a $k^{th}$ cluster of data in the K clusters of data included in the first data, P represents the maximum prime number less than or equal to the ratio $N_{ratio}$ of the bandwidth of the shared frequency resource to the bandwidth of the first data, L represents a ratio of the first threshold to a bandwidth of each cluster of data in the K clusters of data, K represents the quantity of clusters of data included in the first data, L is an integer and $0 \leq L \leq K - 1$, $i_l$ = 0, ..., P - 1, $N_f = P^{L+1}$, $k = 0$, ..., K - 1, Y includes P * K elements, a value of any one of the P * K elements is one of 0 to P * K - 1, values of any two of the P * K elements are different, and $\Delta_1$ and $\Delta_2$ are offsets and may be predefined or indicated by signaling. Optionally, $\Delta_1$ and $\Delta_2$ are integers.

With reference to the third aspect, in some implementations of the third aspect, the processing unit is further configured to: determine to enable frequency hopping; and determine a frequency position index of a second frequency resource based on an identifier of a sending device, where the second frequency resource and the first frequency resource are in different time units; and the transceiver unit is further configured to send the first data on the second frequency resource.

With reference to the third aspect, in some implementations of the third aspect, the processing unit is further configured to determine the frequency position index of the second frequency resource based on the identifier of the sending device and a time unit in which the second frequency resource is located; or the processing unit is further configured to determine the frequency position index of the second frequency resource based on a pseudo-random sequence, where the pseudo-random sequence is a Gold (Gold) sequence or an m sequence, and initialization of the pseudo-random sequence is determined based on the identifier of the sending device.

According to a fourth aspect, a communication apparatus is provided, including: a processing unit, configured to determine a first frequency resource, where the first frequency resource is a frequency resource in a first frequency resource set, the first frequency resource set includes $N_f$ frequency resources, any two of the $N_f$ frequency resources are different, a bandwidth of an overlapping frequency resource between at least two of the Nr frequency resources is greater than 0, a bandwidth of an overlapping frequency resource between any two of the $N_f$ frequency resources is less than or equal to a first threshold, and $N_f$ is an integer greater than or equal to 2; and a transceiver unit, configured to receive the first data on the first frequency resource.

With reference to the fourth aspect, in some implementations of the fourth aspect, the transceiver unit is further configured to send a first frequency resource set index, where the first frequency resource set index is used to determine the first frequency resource set from N frequency resource sets, and N is an integer greater than 1.

With reference to the fourth aspect, in some implementations of the fourth aspect, the transceiver unit is further configured to send a first frequency position index, where the first frequency position index is used to determine the first frequency resource in the first frequency resource set.

With reference to the fourth aspect, in some implementations of the fourth aspect, that any two of the $N_f$ frequency resources are different includes: Any two of the $N_f$ frequency resources partially overlap; or any two of the $N_f$ frequency resources do not overlap at all.

With reference to the fourth aspect, in some implementations of the fourth aspect, that the bandwidth of the overlapping frequency resource between any two of the $N_f$ frequency resources is less than or equal to the first threshold includes: A sum of bandwidths of overlapping frequency resources between any one of Q frequency resources and remaining Q-1 frequency resources is less than or equal to the first threshold, where the Q frequency resources are included in the Nr frequency resources, Q is an integer, and $2 \leq Q \leq N_f$.

With reference to the fourth aspect, in some implementations of the fourth aspect, the first threshold is less than a bandwidth of the first data.

With reference to the fourth aspect, in some implementations of the fourth aspect, the first frequency resource set corresponds to a first frequency position set, the first frequency position set includes $N_f$ frequency positions, and the $N_f$ frequency positions one-to-one correspond to the $N_f$ frequency resources; and the first frequency resource set and/or the first frequency position set are/is associated with a first parameter, and the first parameter includes one or more of the following: a bandwidth of a shared frequency resource, the bandwidth of the first data, the first threshold, a quantity K of clusters of data included in the first data, the quantity $N_f$ of frequency resources included in the first frequency resource set, or Q, where the first threshold indicates an upper limit of a sum of bandwidths of overlapping frequency resources between the Q frequency resources.

With reference to the fourth aspect, in some implementations of the fourth aspect, the first frequency resource set and/or the first frequency position set are/is associated with the bandwidth of the shared frequency resource and the bandwidth of the first data; and a ratio of the bandwidth of the shared frequency resource to the bandwidth of the first data is used to determine the first frequency resource set and/or the first frequency position set.

With reference to the fourth aspect, in some implementations of the fourth aspect, the first frequency resource set and/or the first frequency position set are/is associated with K; and K satisfies: $K \leq P \leq N_{ratio}$, where $N_{ratio}$ represents the ratio of the bandwidth of the shared frequency resource to the bandwidth of the first data, and P represents a maximum prime number less than or equal to $N_{ratio}$.

With reference to the fourth aspect, in some implementations of the fourth aspect, the shared frequency resource includes P * K sub-blocks, the first data includes K clusters of data, bandwidths of any two of the K clusters of data are the same, and a bandwidth of each sub-block is the same as a bandwidth of each cluster of data; and the first frequency resource includes K clusters of frequency resources, the K clusters of frequency resources one-to-one correspond to K clusters of frequency positions, and the K clusters of frequency positions are positions of K sub-blocks in the P* K sub-blocks.

With reference to the fourth aspect, in some implementations of the fourth aspect, the first frequency position set $S_{set}$ satisfies:

$$S_{set} = \{S_0, \dots, S_{N_f-1}\},$$

where
$S_m$ represents an $m^{th}$ frequency position in the first frequency position set $S_{set}$, m = 0, ... , $N_f$ - 1, $S_m(k)$ represents a $k^{th}$ cluster of frequency positions in the $m^{th}$ frequency position, $k = 0, ..., K$ - 1, and $S_m(k)$ is related to the bandwidth of the shared frequency resource, the bandwidth of the first data, the first threshold, and the quantity K of clusters of data included in the first data.

With reference to the fourth aspect, in some implementations of the fourth aspect, a $k^{th}$ cluster of frequency positions $S_{\sum_{l=0}^{L} P^l i_l}(k)$ in a $\sum_{l=0}^{L}(P^l * i_l)^{th}$ frequency position in the first frequency position set $S_{set}$ satisfies:

$$S_{\sum_{l=0}^{L}(P^l * i_l)}(k) = k * P + \left(\sum_{l=0}^{L}(k^l * i_l)\right) \bmod P,$$

or

$$X_{\sum_{l=0}^{L}(P^l * i_l)}(k) = k * P + \left(\sum_{l=0}^{L}(k^l * i_l)\right) \bmod P,$$

and

$$S_{\sum_{l=0}^{L}(P^l * i_l)}(k) = Y\left(X_{\sum_{l=0}^{L}(P^l * i_l)}(k)\right),$$

or

$$S_{\sum_{l=0}^{L}(P^l * i_l)}(k) = k * P + \left(\sum_{l=0}^{L}(k^l * i_l) + \Delta_1\right)\bmod P,$$

or

$$S_{\sum_{l=0}^{L}(P^l * i_l)}(k) = k * P + \left(\sum_{l=0}^{L}\Delta_2(k^l * i_l)\right)\bmod P,$$

or

$$S_{\sum_{l=0}^{L}(P^l * i_l)}(k) = k * P + \left(\sum_{l=0}^{L}\Delta_2(k^l * i_l) + \Delta_1\right)\bmod P,$$

where
the $k^{th}$ cluster of frequency positions corresponds to a $k^{th}$ cluster of data in the K clusters of data included in the first data, P represents the maximum prime number less than or equal to the ratio $N_{ratio}$ of the bandwidth of the shared frequency resource to the bandwidth of the first data, L represents a ratio of the first threshold to a bandwidth of each cluster of data in the K clusters of data, K represents the quantity of clusters of data included in the first data, L is an integer and $0 \leq L \leq K - 1$, $i_l$ = 0, ..., P - 1, $N_f = P^{L+1}$, $k = 0$, ..., K - 1, Y includes P * K elements, a value of any one of the P * K elements is one of 0 to P * K - 1, values of any two of the P * K elements are different, and $\Delta_1$ and $\Delta_2$ are offsets and may be predefined or indicated by signaling. Optionally, $\Delta_1$ and $\Delta_2$ are integers.

According to a fifth aspect, a communication apparatus is provided, and includes a transceiver, a processor, and a memory. The processor is configured to control the transceiver to receive and send a signal. The memory is configured to store a computer program. The processor is configured to: invoke the computer program from the memory and run the computer program, so that the communication apparatus performs the method according to any one of the first aspect and the second aspect or the possible implementations of the first aspect and the second aspect.

Optionally, there are one or more processors, and there are one or more memories.

Optionally, the memory may be integrated with the processor, or the memory and the processor may be disposed separately.

Optionally, the communication apparatus further includes a transmit machine (transmitter) and a receive machine (receiver).

According to a sixth aspect, a communication apparatus is provided. The communication apparatus may be a first apparatus, or may be a one-to-one corresponding module or unit (for example, a chip, a chip system, or a circuit) in the first apparatus for performing the method, the operations, the steps, or the actions described in the first aspect, or may be an apparatus that can be used in a matching manner with the first apparatus.

According to a seventh aspect, a communication system is provided, including a sending device and a receiving device. The sending device is configured to perform the method according to any one of the possible implementations of the first aspect, and the receiving device is configured to perform the method according to any one of the possible implementations of the second aspect.

According to an eighth aspect, a computer-readable storage medium is provided. The computer-readable storage medium stores a computer program or code. When the computer program or code is run on a computer, the computer is enabled to perform the method according to any one of the possible implementations of the first aspect or the second aspect.

According to a ninth aspect, a chip is provided, and includes at least one processor. The at least one processor is coupled to a memory. The memory is configured to store a computer program. The processor is configured to: invoke the computer program from the memory and run the computer program, to enable an apparatus on which a chip system is installed to perform the method according to any one of the possible implementations of the first aspect or the second aspect. The chip may include an input circuit or interface for sending information or data, and an output circuit or interface for receiving information or data.

According to a tenth aspect, a computer program product is provided. The computer program product includes computer program code. When the computer program code is run on an apparatus, the apparatus is enabled to perform the method according to any one of the possible implementations of the first aspect or the second aspect.

## BRIEF DESCRIPTION OF DRAWINGS

FIG. 1 is a diagram of a structure of a communication system 100 applicable to an embodiment of this application;

FIG. 2 is a diagram of a time-frequency resource according to an embodiment of this application;

FIG. 3 is a schematic flowchart of a communication method 300 according to an embodiment of this application;

FIG. 4 is a diagram of determining P * K sub-blocks from a shared frequency resource according to an embodiment of this application;

FIG. 5 is a diagram of a mapping relationship between a first frequency resource and first data according to an embodiment of this application;

FIG. 6 is a diagram of a frequency hopping pattern according to an embodiment of this application;

FIG. 7 is a diagram of a structure of a communication apparatus 1000 according to an embodiment of this application;

FIG. 8 is a diagram of a structure of a communication apparatus 2000 according to an embodiment of this application; and

FIG. 9 is a diagram of a structure of a chip system 3000 according to an embodiment of this application.

## DESCRIPTION OF EMBODIMENTS

The following describes technical solutions of embodiments in this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to a future communication system, for example, a 6th generation (6th generation, 6G) mobile communication system. The technical solutions provided in this application may be further applied to device-to-device (device to device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. The V2V refers to communication between vehicles. The V2P refers to communication between a vehicle and a person (including a pedestrian, a bicyclist, a driver, a passenger, or the like). The V2I refers to communication between a vehicle and an infrastructure. The infrastructure is, for example, a road side unit (road side unit, RSU) or a network device. There are two types of RSUs: a terminal-type RSU and a base station-type RSU. Because the terminal-type RSU is deployed on a road side, the terminal-type RSU is in a non-mobile state, and mobility does not need to be considered. The base station-type RSU may provide timing synchronization and resource scheduling for a vehicle that communicates with the base station-type RSU. The V2N refers to communication between a vehicle and a network device. It can be understood that the foregoing descriptions are examples, and are not limited in embodiments of this application. For example, V2X may further include NR system-based V2X communication in current 3GPP Rel-16 and later releases.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, or a terminal device in 6G and a future evolved public land mobile communication network (public land mobile network, PLMN). This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not only a hardware device, but is used to implement a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In embodiments of this application, an apparatus configured to implement a function of the terminal device, namely, a terminal apparatus, may be a terminal device; or may be an apparatus that can support the terminal device in implementing the function, for example, a chip system or a chip, where the apparatus may be installed in the terminal device. In embodiments of this application, the chip system may include a chip, or may include a chip and another discrete component.

In embodiments of this application, the network device may be a device for communicating with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission and reception point (transmission and reception point, TRP), a transmission point (transmission point, TP), a master station, a secondary station, a multi-standard radio (motor slide retainer, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), or a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a CU, or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node.

In embodiments of this application, an apparatus configured to implement a function of the network device may be a network device; or may be an apparatus that can support the network device in implementing the function, for example, a chip system or a chip, where the apparatus may be installed in the network device. In embodiments of this application, the chip system may include a chip, or may include a chip and another discrete component.

The network device and the terminal device may be deployed on the land, including an indoor device, an outdoor device, a handheld device, or a vehicle-mounted device; may be deployed on the water; or may be deployed on an airplane, a balloon, and a satellite in the air. A scenario in which the network device and the terminal device are located is not limited in embodiments of this application.

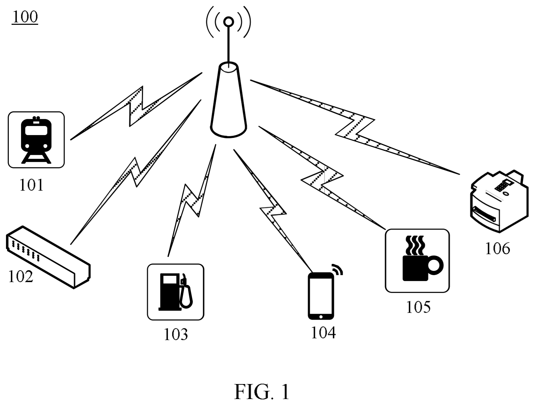

A communication system applicable to embodiments of this application is briefly described below with reference to FIG. 1.

FIG. 1 is a diagram of a structure of a communication system applicable to an embodiment of this application. As shown in FIG. 1, a communication system in an embodiment of this application may include a network device (for example, a gNB) and a terminal device (for example, UE 1 to UE 6). The network device may include one or more antennas. In addition, the network device may additionally include a transmitter chain and a receiver chain. A person of ordinary skill in the art may understand that both the transmitter chain and the receiver chain may include a plurality of components (for example, a processor, a modulator, a multiplexer, a demodulator, a demultiplexer, and an antenna) related to signal sending and receiving. FIG. 1 is merely a simplified diagram as an example. A quantity of terminal devices in the communication system in FIG. 1 is merely an example. The quantity of terminal devices in the communication system may be another quantity. In addition, the communication system may further include another communication device, which is not shown in FIG. 1. In the communication system, the terminal device (for example, the UE 1 to the UE 6) may determine a frequency resource from a frequency resource set, and send an uplink signal to the network device (for example, the gNB) on the frequency resource. Correspondingly, the network device (for example, the gNB) receives the uplink signal. Similarly, in the communication system, the network device (for example, the gNB) may also send a downlink signal to the terminal device (for example, the UE 1 to the UE 6) on the determined frequency resource.

It should be noted that a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be a sending device, or may be a functional module that is in the sending device and that can invoke a program and execute the program, or may be a module or unit (for example, a chip, a chip system, or a circuit) that is in the sending device and that one-to-one corresponds to the method, the operation, the step, or the action described in the first aspect, or may be another apparatus that can be used in a matching manner with the sending device.

For ease of understanding embodiments of this application, terms or technologies in this application are briefly described first.

1. Time domain unit and frequency domain unit

Data or information may be carried by using a time-frequency resource, and the time-frequency resource includes a time domain resource and/or a frequency domain resource.

In time domain, a time domain resource may include one or more time domain units (which may also be referred to as time units). In embodiments of this application, one time unit may include several time domain resources. The time domain unit is, for example, a radio frame (radio frame, RF). A time domain resource included in the time domain unit is, for example, a subframe (subframe), a frame, a half subframe, or a half frame, a slot (slot), a sub-slot (sub-slot), a mini-slot (mini-slot), a partial slot (partial slot), an orthogonal frequency division multiplexing (orthogonal frequency division multiplexing, OFDM) symbol (symbol), or a single carrier frequency division multiple access (single carrier frequency division multiple access, SC-FDMA) symbol. Alternatively, the time domain unit may be a set of one or more time domain resources. For example, the time domain unit is one or more OFDM symbols in one slot. For example, a quantity of the one or more OFDM symbols is 6, 7, 12, or 14. One or more time units may be consecutive in time, or may be discrete, or may be time units of other lengths. Optionally, in embodiments of this application, the time domain resource may also be referred to as a sub time domain unit, or the "time domain resource" and the "sub time domain unit" may be a same concept, and the two are interchangeable. In addition, duration of the slot may be related to a subcarrier spacing. For example, when the subcarrier spacing is 15 kilohertz (kHz), duration of one slot is 1 millisecond (ms); when the subcarrier spacing is 30 kHz, duration of one slot is 0.5 ms; or when the subcarrier spacing is 60 kHz, duration of one slot is 0.25 ms. Similarly, it can be learned through deduction that, when the subcarrier spacing is $15 \times 2^\mu$, duration of one slot is $2^{-\mu}$ ms, where $\mu = 0, 1, 2, \ldots$.

In frequency domain, a frequency domain resource may include one or more frequency domain units. Optionally, the frequency domain resource may also be replaced with a frequency resource (frequency resource), indicating a resource used to carry frequency domain data. One frequency domain unit may be one resource element (resource element, RE), one resource block (resource block, RB), one sub-channel (sub-channel), one resource pool (resource pool), one resource set, one bandwidth (bandwidth), one BWP, one carrier (carrier), one channel (channel), one interlace (interlace) RB, or the like. Optionally, one carrier may include one or more BWPs. Optionally, one BWP may include one or more resource pools. One BWP may include one or more RB sets. Optionally, one resource pool may include one or more RBs or sub-channels. Optionally, one sub-channel may include one or more RBs. One RB may include one or more REs. Optionally, in embodiments of this application, an RE may be equivalent to a subcarrier. In other words, one RE is one subcarrier, or one subcarrier is one RE. One subcarrier may generally carry one piece of complex data, for example, a modulation symbol (modulation symbol).

In other words, data may be transmitted between the network device and the terminal device by using a time-frequency resource.

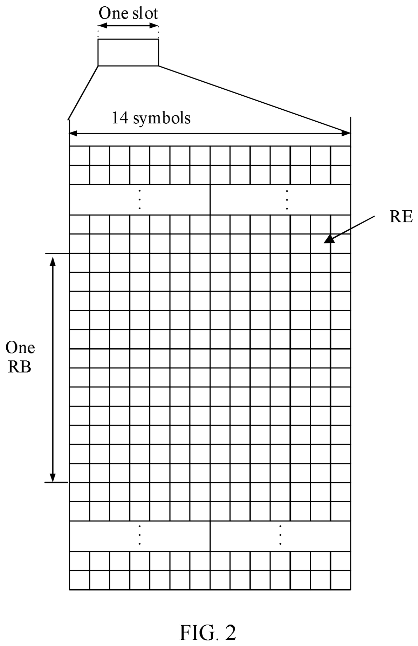

FIG. 2 is a diagram of a time-frequency resource according to an embodiment of this application. For example, a time domain resource is a slot, and a frequency domain resource is an RB. One slot may include 14 time domain symbols, and one RB may include 12 subcarriers. One RE may be considered as a minimum resource unit used for data transmission, or one RE is a minimum resource unit used for resource mapping of to-be-sent data. As shown in FIG. 2, one RE corresponds to one symbol in time domain, for example, an orthogonal frequency division multiplexing (orthogonal frequency division multiplexing, OFDM) symbol or a discrete Fourier transform spread orthogonal frequency division multiplexing (discrete Fourier transform spread orthogonal frequency division multiplexing, DFT-s-OFDM) symbol. One RE corresponds to one subcarrier in frequency domain, and one RE may be used to map one complex symbol, for example, a complex symbol obtained through modulation or a complex symbol obtained through precoding. This is not limited in this application. It should be understood that FIG. 2 is merely a diagram of a possible time-frequency resource provided for ease of understanding. A specific form of the time-frequency resource is not limited in this application.

2. Frequency hopping (frequency hopping, FH)

A change in a frequency position mapped by to-be-sent data is referred to as frequency hopping. Generally, when frequency hopping is enabled, the frequency position mapped by the to-be-sent data changes with different moments. For example, frequency positions of to-be-sent data in different slots may be different. Transmission interference between to-be-sent data of different terminal devices may be randomized through frequency hopping, to avoid that to-be-sent data of a sending device in a cell is always interfered with by high-power to-be-sent data of a sending device in another cell.

3. Frequency hopping pattern (frequency hopping pattern)

When frequency hopping is enabled, a set that includes frequency positions corresponding to different moments and that is determined by a terminal device may be referred to as a frequency hopping pattern. The terminal device may transmit an uplink signal based on the frequency hopping pattern, where the frequency hopping pattern is used to determine one or more of a code domain resource unit (for example, a sequence), a time domain resource unit (for example, a symbol), and a frequency domain resource unit (for example, a subcarrier) corresponding to uplink transmission. The terminal device maps the uplink signal (for example, one or more code domain resource units) to the corresponding time domain resource unit and/or frequency domain resource unit for sending. In a frequency hopping pattern, different time domain resource units may correspond to different frequency domain resource units, and/or different time domain resource units may correspond to different code domain resource units. That a network device receives the uplink signal may be understood as receiving uplink signals of one or more terminal devices based on the frequency hopping pattern.

The foregoing briefly describes terms used in this application. Details are not described in the following embodiments. In addition, the foregoing descriptions of the terms are merely descriptions for ease of understanding, and do not limit the protection scope of embodiments of this application.

In a grant free (grant free) system, a plurality of terminal devices select a part of shared time-frequency resources to send data. Time-frequency resources selected by different terminals may completely or partially overlap, that is, interference may be caused when different terminal devices perform data transmission, affecting data demodulation performance of a network device. Particularly, in a large-scale access scenario, as a quantity of access devices (terminal devices) increases, a probability that time-frequency resources selected by the terminal for sending data overlap is higher.

In view of this, this application provides a communication method and a communication device. An adaptive frequency resource set is designed, so that a bandwidth of an overlapping frequency resource between at least two frequency resources in the frequency resource set is greater than 0, and a bandwidth of an overlapping frequency resource between any two frequency resources is less than or equal to a first threshold, to reduce interference during data transmission of sending devices. In addition, more frequency resources can be designed to support a larger quantity of sending devices, to achieve higher flexibility.

For ease of understanding of embodiments of this application, the following descriptions are provided.

(1) In this application, unless otherwise stated or there is a logic conflict, terms and/or descriptions in different embodiments are consistent and may be mutually referenced, and technical features in different embodiments may be combined based on an internal logical relationship thereof, to form a new embodiment.

(2) In this application, "at least one" refers to one or more, "a plurality of" refers to two or more, and "and/or" describes an association relationship between associated objects, and indicates that three relationships may exist. The term "and/or" describes an association relationship for describing associated objects and represents that three relationships may exist. For example, A and/or B may represent the following three cases: Only A exists, both A and B exist, and only B exists, where A and B may be singular or plural. In text descriptions of this application, the character "/" generally represents an "or" relationship between associated objects. At least one of the following items (pieces) or a similar expression thereof indicates any combination of these items, including a single item (piece) or any combination of a plurality of items (pieces). For example, at least one of a, b, and c may represent: a, b, c, a and b, a and c, b and c, or a, b, and c, where Each of a, b, and c may be in a singular form or a plural form.

(3) In this application, "first", "second", and various numbers are used for differentiation for ease of description, and are not used to limit the scope of embodiments of this application, for example, are intended to distinguish between different messages but not to describe a specific order or sequence. It should be understood that objects described in such a way are interchangeable in an appropriate circumstance, so that a solution other than embodiments of this application can be described.

(4) In this application, the terms "include", "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

(5) In this application, "indicating" may include "directly indicating" and "indirectly indicating". When a piece of indication information indicates A, the indication information may directly indicate A or indirectly indicate A, but it does not indicate that the indication information definitely carries A.

(6) In this application, "protocols" in this application may be standard protocols in the communication field, for example, may include a 5G protocol, a new radio (new radio, NR) protocol, and a related protocol applied to a future communication system. This is not limited in this application. "Predefinition" may include definition in advance, for example, definition in a protocol. "Pre-configuration" may be implemented by pre-storing corresponding code or a corresponding table in a device, or may be implemented in another manner that may indicate related information. A specific implementation thereof is not limited in this application.

(7) In this application, configuration may be signaling configuration, or may be described as configuration signaling. For example, the signaling configuration is configured by using signaling sent by a base station, where the signaling may be a radio resource control (radio resource control, RRC) message, downlink control information (downlink control information, DCI), or a system information block (system information block, SIB). For another example, the signaling configuration may be preconfigured signaling sent to the sending device, or may be configured to the sending device in a pre-configuration manner. The pre-configuration herein is to pre-define or configure a value of a corresponding parameter in a protocol manner, and store the value in the sending device when the sending device performs communication.

(8) In this application, "communication" may also be described as "data transmission", "information transmission", "data processing", or the like. "Transmission" includes "sending" and "receiving".

(9) In this application, "*" is an operation symbol, and represents a product. In other words, a*b represents multiplication of two numbers. $a \bmod b$ represents a modulo operation. Optionally, unless otherwise specified, a*b may be replaced with ab, axb, or a·b. This is not limited in this application.

The following describes, in detail with reference to the accompanying drawings, the communication method provided in embodiments of this application. Embodiments provided in this application are applicable to any communication scenario in which a transmit-end device communicates with a receive-end device, for example, are applied to the communication system shown in FIG. 1.

It should be understood that embodiments of this application are applicable to any communication scenario in which a transmit-end device communicates with a receive-end device. In other words, embodiments of this application are applicable to an uplink or downlink communication scenario. For example, uplink communication is communication between a terminal device and a network device. In this case, a sending device is the terminal device, and a receiving device is the network device. Downlink communication is communication between a network device and a terminal device. In this case, a sending device is the network device, and a receiving device is the terminal device. Therefore, the sending device may be a network device or a terminal device, and the receiving device may also be a network device or a terminal device. This is not limited in this application.

Without loss of generality, for ease of understanding and description, in the following embodiments of this application, an uplink communication scenario in a grant free system is used as an example to describe the solutions of this application. For example, a sending device may be UE, and a receiving device may be a base station. It should be understood that for an implementation in the downlink communication scenario, refer to related descriptions of the uplink communication scenario. Details are not described in this application.

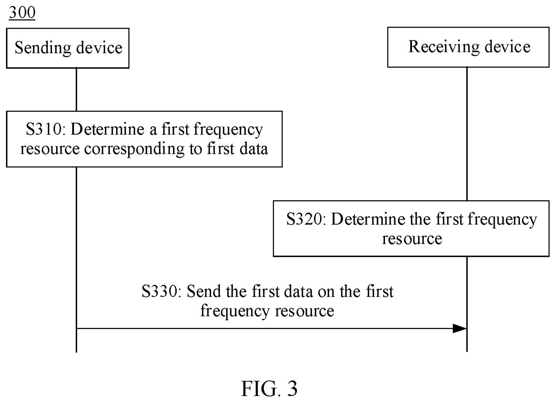

FIG. 3 is a schematic flowchart of a communication method 300 according to an embodiment of this application. As shown in FIG. 3, the method procedure may be performed by a sending device and a receiving device, or may be performed by a module and/or a component (for example, a chip or an integrated circuit) that are installed in the sending device and the receiving device and that have a corresponding function. This is not limited in this application. The following uses the sending device and the receiving device as execution bodies for description, and includes the following plurality of steps.

S310: The sending device determines a first frequency resource corresponding to first data.

The first frequency resource is a frequency resource in a first frequency resource set, the first frequency resource set includes $N_f$ frequency resources, any two of the $N_f$ frequency resources are different, a bandwidth of an overlapping frequency resource between at least two of the $N_f$ frequency resources is greater than 0, a bandwidth of an overlapping frequency resource between any two of the $N_f$ frequency resources is less than or equal to a first threshold, and $N_f$ is an integer greater than or equal to 2.

For example, that any two of the $N_f$ frequency resources are different may be understood as that any two of the $N_f$

frequency resources partially overlap, or any two of the $N_f$ frequency resources do not overlap at all. For example, it is assumed that the frequency resource is represented at a granularity of an RB. The shared frequency resource includes nine RBs numbered from an RB 0 to an RB 8. The first frequency resource set belongs to the shared frequency resource. The first frequency resource set includes three frequency resources. In other words, $N_f$ is equal to 3. If a frequency resource #0 occupies the RB 0 to the RB 4, a frequency resource #1 occupies the RB 2 to the RB 6, and a frequency resource #2 occupies the RB 4 to the RB 8, any two of the frequency resource #0 to the frequency resource #2 partially overlap, and an overlapping bandwidth between any two frequency resources is 3 RBs. If the frequency resource #0 occupies the RB 0 to the RB 2, the frequency resource #1 occupies the RB 3 to the RB 5, and the frequency resource #2 occupies the RB 6 to the RB 8, any two of the frequency resource #0 to the frequency resource #2 do not overlap at all.

It should be understood that, if two frequency resources partially or completely overlap, it may be referred to that the two frequency resources are non-orthogonal; or if two frequency resources do not overlap at all, it may be referred to that the two frequency resources are orthogonal.

For example, that the bandwidth of the overlapping frequency resource between the at least two of the $N_f$ frequency resources is greater than 0 may be understood as that the at least two of the Nr frequency resources are non-orthogonal. It should be understood that, in a grant free system, compared with a case in which different frequency resources are orthogonal, this case in which different frequency resources can be non-orthogonal brings more degrees of freedom, so that more frequency resources can be designed.

For example, the first threshold is less than a bandwidth of the first data. For example, if the bandwidth of the first data occupies five RBs, the first threshold may be four RBs, three RBs, two RBs, or one RB. This is not limited in this application.

Optionally, in this embodiment of this application, the first threshold may be replaced with a maximum overlapping bandwidth, and is used to indicate an upper limit of a sum of bandwidths of overlapping frequency resources between any Q of the $N_f$ frequency resources, or indicate an upper limit of a sum of bandwidths of overlapping frequency resources between any one of the Q frequency resources and remaining Q-1 frequency resources. The first threshold (or the maximum overlapping bandwidth) may be predefined, or may be configured or preconfigured by a base station, or may be indicated through signaling. This is not limited in this application.

For example, that the bandwidth of the overlapping frequency resource between any two of the $N_f$ frequency resources is less than or equal to the first threshold includes: A bandwidth of an overlapping frequency resource between any one of Q frequency resources of the $N_f$ frequency resources and remaining Q-1 frequency resources is less than or equal to the first threshold. Specifically, if Q is equal to 2, a bandwidth of an overlapping frequency resource between one frequency resource and another frequency resource is less than or equal to the first threshold. For another example, if Q is greater than 2, a sum of bandwidths of overlapping frequency resources between any one of the Q frequency resources and remaining Q-1 frequency resources is less than or equal to the first threshold. The Q frequency resources belong to the $N_f$ frequency resources. In other words, the Q frequency resources are any Q frequency resources in the $N_f$ frequency resources, where Q is an integer and $2 \leq Q \leq N_f$.

Optionally, if Q=2, it indicates that a bandwidth of an overlapping frequency resource between any two of the $N_f$ frequency resources is less than or equal to the first threshold. If Q=3, it indicates that a sum of bandwidths of overlapping frequency resources between any one of any three of the $N_f$ frequency resources and remaining two frequency resources is less than or equal to the first threshold. It should be understood that, in a scenario in which Q is greater than 3, the foregoing feature is also met. Details are not described herein again.

For example, it is assumed that the frequency resource is represented at a granularity of an RB, the first threshold is equal to 3 (that is, three RBs), and the first frequency resource set includes two frequency resources. $N_f$ is equal to 2, and Q is equal to 2. When a frequency resource #0 occupies an RB 0 to an RB 6, and a frequency resource #1 occupies an RB 5 to an RB 11, a bandwidth of an overlapping frequency resource between the frequency resource #0 and the frequency resource #1 is two RBs, and is less than the first threshold. When the frequency resource #0 occupies the RB 0 to the RB 4, and the frequency resource #1 occupies the RB 2 to the RB 6, a bandwidth of an overlapping frequency resource between the frequency resource #0 and the frequency resource #1 is three RBs, and is equal to the first threshold.

It should be understood that, for an overlapping degree between different frequency resources in the frequency resource set, different quantities of frequency resources may be designed based on different overlapping degrees, to adapt to scenarios with different quantities of sending devices.

In this embodiment of this application, a position of a frequency resource may be represented as a frequency position. In other words, the frequency resource corresponds to the frequency position. The frequency position may be used to determine a position of a frequency resource to which the first data is mapped, that is, a position of a frequency resource carrying the first data. The frequency position may include a start position (that is, a start position of the frequency resource to which the first data is mapped), an end position (that is, an end position of the frequency resource to which the first data is mapped, or referred to as a termination position of the frequency resource to which the first data is mapped), or a position of a frequency resource to which each element of the first data is mapped. For example, when the frequency position is the start position or the end position, based on the frequency position and the bandwidth of the first data, the frequency resource to which the first data is mapped may be determined to send.

Optionally, the frequency position may also be referred to as a frequency domain position, and the frequency resource may also be referred to as a frequency domain resource. For ease of description, the following uses the frequency resource and the frequency position as an example for description.

It should be understood that one frequency position set includes one or more frequency positions, and the sending device may select a frequency position from the frequency position set, to map the first data. Any two frequency positions in one frequency position set are different, an overlapping bandwidth between frequency resources corresponding to at least two frequency positions is greater than 0, and an overlapping bandwidth between frequency resources corresponding to any two frequency positions is less than or equal to the first threshold.

Optionally, each frequency position in the frequency position set is numbered, and a number is referred to as a frequency position index. The frequency position index one-to-one correspond to the frequency position, and different frequency positions correspond to different frequency position indexes.

In an implementation, a position of the first frequency resource may be represented as a first frequency position. In other words, the first frequency resource corresponds to the first frequency position. Similarly, a position of the first frequency resource set (that is, positions of all frequency resources in the first frequency resource set) may be represented as a first frequency position set. In other words, the first frequency resource set corresponds to the first frequency position set. For example, the first frequency position set includes $N_f$ frequency positions, the first frequency resource set includes $N_f$ frequency resources, and the $N_f$ frequency positions one-to-one correspond to the $N_f$ frequency resources. In other words, the frequency position set corresponds to the frequency resource set, and frequency positions in the frequency position set one-to-one correspond to frequency resources in the frequency resource set. Determining a frequency position is determining a corresponding frequency resource, and determining a frequency position set is determining a corresponding frequency resource set.

In this embodiment of this application, unless otherwise specified, descriptions of the frequency position set is applicable to descriptions of the frequency resource set, and descriptions of the frequency positions in the frequency position set is also applicable to descriptions of the frequency resources in the frequency resource set.

In this embodiment of this application, the first data may include K clusters (cluster) of data, where K is a positive integer. It may be understood that the first data is divided into the K clusters of data. For example, when the first data includes K (K>1) clusters of data, each cluster of data is consecutively mapped. In other words, frequency positions to which data of each cluster is mapped are consecutive. When frequency positions to which different clusters of data are mapped do not overlap, the K clusters of data may correspond to K clusters of frequency resources. Similarly, the frequency position may include K clusters of frequency positions. It may be understood that the frequency position is divided into K clusters of frequency positions, and the K clusters of frequency positions one-to-one correspond to the K clusters of frequency resources. For example, when one frequency position includes K (K>1) clusters of frequency positions, frequency resources determined based on each cluster of frequency positions are consecutive, and different clusters of frequency resources do not overlap.

It should be understood that the K clusters of frequency positions one-to-one correspond to the K clusters of data. In other words, a $k^{th}$ cluster of frequency positions corresponds to a $k^{th}$ cluster of data (k=0, ..., and K-1), or the $k^{th}$ cluster of data is mapped to a $k^{th}$ cluster of frequency resources corresponding to the $k^{th}$ cluster of frequency positions. The $k^{th}$ cluster of frequency positions may include a start position of the $k^{th}$ cluster of data (that is, a start position of a frequency resource to which the $k^{th}$ cluster of data is mapped), or an end position of the $k^{th}$ cluster of frequency positions (that is, an end position of a frequency resource to which the $k^{th}$ cluster of data is mapped), or a position of a frequency resource to which each element in the $k^{th}$ cluster of data is mapped.

Optionally, the K clusters of data may be replaced with K data blocks (block), K groups (group) of data, or the like. This is not limited in this application.

Optionally, the quantity K of clusters may be predefined, or may be configured by higher layer signaling (for example, RRC).

Optionally, a value of the quantity K of clusters may be any one of 1, 2, 3, 4, or 5.

The following specifically describes a manner of determining the first frequency resource corresponding to the first data.

In a first implementation, the sending device determines a first frequency position index, and determines the first frequency resource in the first frequency resource set based on the first frequency position index.

It should be understood that the first frequency set may include one or more frequency resources. If the first frequency set includes one frequency resource, the frequency resource is the first frequency resource. If the first frequency set includes a plurality of frequency resources, the first frequency resource is one of the plurality of frequency resources.

It should be further understood that the $N_f$ frequency resources in the first frequency resource set one-to-one correspond to $N_f$ frequency position indexes, and the first frequency position index is one of the $N_f$ frequency position indexes.

Optionally, that the sending device determines the first frequency resource in the first frequency position set based on the first frequency position index includes: The sending device determines a first frequency position in the first frequency position set based on the first frequency position index, and determines the first frequency resource based on the first frequency position.

For example, the first frequency position index may be determined in any one of the following manners:

(1) indicated by higher layer signaling specific to the sending device;
(2) determined jointly by higher layer signaling specific to the sending device and higher layer signaling specific to a cell;
(3) determined (a next frequency position index) based on an identifier of the sending device; or
(4) determined jointly by higher layer signaling specific to the sending device and an identifier of the sending device.

That different sending devices select different frequency positions from a same frequency position set may be understood as that a larger quantity of frequency positions in the frequency position set indicates a larger quantity of access devices that can be supported. Based on the maximum overlapping bandwidth (that is, the first threshold) corresponding to the frequency position set, a status of overlapping between data of different sending devices may be controlled. In other words, interference between data transmission of the different sending devices is controlled.

For example, the sending device is UE, and the receiving device is a base station. The base station may send signaling #1 to the UE, where the signaling #1 indicates the first frequency position index. Correspondingly, the UE receives the signaling #1 from the base station, and determines the first frequency position index based on the signaling #1. Alternatively, the base station may directly send the first frequency position index to the UE. Further, the UE determines, in the first frequency resource set, the first frequency resource corresponding to the first frequency position index. For example, the signaling #1 may be RRC signaling or DCI signaling. Alternatively, the UE may independently determine the first frequency resource corresponding to the first data, and notify the base station of the first frequency resource, so that the base station subsequently receives the first data on the first frequency resource. For example, the UE determines the first frequency position index based on the identifier of the sending device, to determine, in the first frequency resource set, the first frequency resource corresponding to the first frequency position index.

Optionally, the method 300 may further include the following step S301. For example, before performing step S310, the sending device determines the first frequency resource set and/or the first frequency position set.

S301: The sending device determines the first frequency resource set and/or the first frequency position set.

For example, it is assumed that there are N frequency resource sets, and there are also N frequency position sets. An $n^{th}$ frequency position set corresponds to an $n^{th}$ frequency resource set, and a plurality of frequency positions in the $n^{th}$ frequency position set one-to-one correspond to a plurality of frequency resources in the $n^{th}$ frequency resource set, where n=0, ..., and N - 1, and N is a positive integer.

Optionally, the frequency position set is predefined, or indicated by higher layer signaling.

For example, when N = 1, there is one frequency position set, the first frequency position set determined by the sending device is the frequency position set, and the frequency position set includes at least two frequency positions.

For another example, when N > 1, there are a plurality of frequency position sets, the first frequency position set determined by the sending device is a frequency position set determined from the plurality of frequency position sets, and the frequency position set includes at least two frequency positions.

In a first implementation, the sending device determines a first frequency resource set index; and determines the first frequency resource set from N frequency resource sets based on the first frequency resource set index, where N is an integer greater than 1.

It may be understood that the N frequency resource sets one-to-one correspond to the N frequency resource set indexes, and the first frequency resource set index is one of the N frequency resource set indexes.

For example, the sending device is UE, and the receiving device is a base station. The base station may send signaling #2 to the UE, where the signaling #2 indicates the first frequency resource set index. Correspondingly, the UE receives the signaling #2 from the base station. Alternatively, the base station may directly send the first frequency resource set index to the UE. Further, the UE determines the first frequency resource set index based on the signaling #2, and determines, from the N frequency resource sets, the first frequency resource set corresponding to the first frequency resource set index. For example, the signaling #2 may be RRC signaling or DCI signaling. Alternatively, the UE may independently determine the first frequency resource set, and notify the base station of the first frequency resource set, so that the base station subsequently receives the first data on the first frequency resource set. For example, the UE determines the first frequency resource set index based on the identifier of the sending device, and then determines, from the N frequency resource sets, the first frequency resource set corresponding to the first frequency resource set index.

In a second implementation, the first frequency resource set and/or the first frequency position set are/is associated with a first parameter, and the first parameter includes one or more of the following:

(1) $N_f$.

For example, Nr represents a quantity of frequency resources included in the first frequency resource set, for example, $N_f \geq 2$.

(2) Q.

For example, Q represents a quantity of any Q frequency resources in the $N_f$ frequency resources, for example, $2 \leq Q \leq N_f$.

(3) First threshold.

For example, the first threshold indicates an upper limit of a sum of bandwidths of overlapping frequency resources between any Q of the $N_f$ frequency resources, and the first threshold may be described as the maximum overlapping bandwidth.

(4) K.

For example, K represents the quantity of clusters of data included in the first data. For example, $K \geq 1$.

(5) Bandwidth of the first data.

For example, the bandwidth of the first data indicates a size of the first data (that is, a quantity of elements included in the first data). For example, the bandwidth of the first data is 10 RBs, or the bandwidth of the first data is 10 subcarriers.

(6) Bandwidth of the shared frequency resource.

For example, the bandwidth of the shared frequency resource is a bandwidth value of a segment of the shared frequency resource. The plurality of sending devices may select a part of or all frequency resources from the shared frequency resource for data transmission. Frequency resources selected by different sending devices may be orthogonal, or partially overlap, or completely overlap. For example, it is assumed that the frequency resource is represented at a granularity of an RB, and a bandwidth of the shared frequency resource is 20 RBs that are sequentially numbered from an RB 0 to an RB 19. A sending device #1 selects the RB 0 to the RB 10 from the shared frequency resource to transmit data #1, a sending device #2 selects the RB 2 to the RB 12 from the shared frequency resource to transmit data #2, and a sending device #3 selects the RB 13 to the RB 19 from the shared frequency resource to transmit data #3. It can be learned that, at a same transmission moment, there is interference in data transmission between the sending device #1 and the sending device #2, and there is no interference in data transmission between the sending device #1 and the sending device #3, and between the sending device #2 and the sending device #3.

Optionally, the bandwidth of the shared frequency resource may be predefined, or indicated by higher layer signaling.

Optionally, the shared frequency resource may be predefined, or indicated by higher layer signaling.

It may be understood that the first frequency resource set and/or the first frequency position set are/is associated with the first parameter, the first frequency resource set is one of the N frequency resource sets, and the first frequency position set is one of the N frequency position sets. Therefore, the N frequency resource sets and/or the N frequency position sets are associated with the first parameter. For example, different frequency resource sets in the N frequency resource sets correspond to different values of the first parameter.

In a first example, the first frequency resource set and/or the first frequency position set are/is associated with the bandwidth of the shared frequency resource and the bandwidth of the first data. Specifically, the first frequency resource set and/or the first frequency position set are/is associated with the bandwidth of the shared frequency resource and the bandwidth of the first data. In other words, the sending device may determine the first frequency resource set and/or the first frequency position set based on a ratio of the bandwidth of the shared frequency resource to the bandwidth of the first data.

For example, the ratio $N_{ratio}$ of the bandwidth of the shared frequency resource to the bandwidth of the first data satisfies:

$$N_{ratio} = \frac{N_{Share}^{BW}}{N_{TX}^{BW}} \qquad (1)$$

Herein, $N_{Share}^{BW}$ represents the bandwidth of the shared frequency resource, and $N_{TX}^{BW}$ represents the bandwidth of the first data. When the first data includes K (K>1) clusters of data, $N_{TX}^{BW} = K * N_{Cluster}^{BW}$, where $N_{Cluster}^{BW}$ represents a bandwidth of each cluster of data. In other words, the bandwidth of each cluster of data is the same. When the first data includes K=1 cluster of data, $N_{TX}^{BW} = N_{Cluster}^{BW}$. A bandwidth of the cluster of data is the bandwidth of the first data. Therefore, the foregoing formula (1) may be described as:

$$N_{ratio} = \frac{N_{Share}^{BW}}{K * N_{Cluster}^{BW}} \quad (2)$$

For example, the first frequency resource set and/or the first frequency position set are/is related to an integer $\lfloor N_{ratio} \rfloor$ determined based on the ratio $N_{ratio}$. For example, if a value of $\lfloor N_{ratio} \rfloor$ is 2, 3, 4, 5, 6, 7, 8, 9, or 10, there are nine corresponding frequency position sets.

It should be understood that, a larger ratio of the bandwidth of the shared frequency resource to the bandwidth of the first data indicates a larger quantity of frequency positions that can be designed in the first frequency position set. In addition, different frequency position sets are designed for different ratios, to adapt to scenarios with various bandwidths of the shared frequency resource and various bandwidths of the first data.

In a second example, the first frequency resource set and/or the first frequency position set are/is associated with the first threshold. Specifically, the first frequency resource set and/or the first frequency position set are/is associated with the maximum overlapping bandwidth.

Optionally, the maximum overlapping bandwidth corresponds to a frequency position set, and different frequency position sets correspond to different maximum overlapping bandwidths.

For example, the maximum overlapping bandwidth $N_{Max,Ola}^{BW}$ satisfies:

$$N_{Max,Ola}^{BW} = N_{ratio}^{Max2Tx} * N_{TX}^{BW} \quad (3)$$

Herein, $N_{ratio}^{Max2Tx}$ represents a ratio of the maximum overlapping bandwidth $N_{Max,Ola}^{BW}$ to the bandwidth of the first data $N_{TX}^{BW}$, and is referred to as a first overlapping ratio. It may be understood that the maximum overlapping bandwidth may be determined by determining the first overlapping ratio.

Optionally, the first overlapping ratio may be predefined, or indicated by higher layer signaling.

For example, the maximum overlapping bandwidth $N_{Max,Ola}^{BW}$ further satisfies:

$$N_{Max,Ola}^{BW} = L * N_{Cluster}^{BW} \quad (4)$$

Herein, $L$ represents a ratio of the maximum overlapping bandwidth $N_{Max,Ola}^{BW}$ to the bandwidth $N_{Cluster}^{BW}$ of each cluster of data, and is referred to as a second overlapping ratio. It may be understood that the maximum overlapping bandwidth may be determined by determining the second overlapping ratio.

Optionally, the second overlapping ratio may be predefined, or indicated by higher layer signaling.

Based on the foregoing formulas (3) and (4), the second overlapping ratio L satisfies:

$$L = \frac{N_{Max,Ola}^{BW}}{N_{Cluster}^{BW}} = \frac{N_{ratio}^{Max2Tx} N_{TX}^{BW}}{N_{Cluster}^{BW}} = K * N_{ratio}^{Max2Tx} \quad (5)$$

It should be understood that, a smaller maximum overlapping bandwidth indicates a stronger constraint. In other words, a smaller sum of overlapping bandwidths between different frequency positions in the frequency position set indicates a smaller quantity of frequency positions in the corresponding frequency position set. Different frequency position sets corresponding to different maximum overlapping bandwidths may be designed for different quantities of sending devices and different interference requirements between a plurality of sending devices.

In a third example, the first frequency resource set and/or the first frequency position set are/is associated with a value of Q.

Optionally, Q corresponds to a frequency position set, and different frequency position sets may correspond to different values of Q. For example, two frequency position sets may be included. One frequency position set corresponds to Q=2. In other words, two frequency resources are determined based on any two frequency positions, and a bandwidth of an overlapping frequency resource between the two frequency resources does not exceed the maximum overlapping bandwidth. Another frequency position set corresponds to Q=3. In other words, three frequency resources are determined based on any three frequency positions, and a sum of bandwidths of overlapping frequency resources between any one of the three frequency resources and remaining two frequency resources does not exceed the maximum overlapping bandwidth.

It should be understood that, for a maximum overlapping bandwidth, a larger value of Q indicates a stronger constraint. In other words, a larger quantity Q of frequency resources corresponding to the maximum overlapping bandwidth indicates a smaller quantity of frequency positions in a corresponding frequency position set. Different frequency position sets corresponding to different values of Q may be designed for different quantities of sending devices and different interference requirements between a plurality of sending devices.

In a fourth example, the first frequency resource set and/or the first frequency position set are/is associated with a value of K.

For example, different frequency position sets may correspond to different K.

Optionally, K satisfies: $K \leq P \leq N_{ratio}$, where P represents a maximum prime number less than or equal to $N_{ratio}$. For example, it is assumed that the frequency resource is represented at a granularity of an RB. If the shared frequency resource includes $N_{Share}^{BW} = 20$ RBs, and the bandwidth of the first data is $N_{TX}^{BW} = 6$ RBs, $N_{ratio}$ = 10/3, K=3, and the bandwidth of each cluster of data is $N_{Cluster}^{BW} = 2$ RBs. In this case, a maximum prime number that does not exceed $N_{ratio}$ is 3, and a value of P is 3.

Optionally, K satisfies: $K \leq P \leq N_{ratio}$, where P may alternatively represent a prime number less than or equal to $N_{ratio}$. This is not limited in this application.

Optionally, the value of P may correspond to K and Q.

Optionally, when K=3 and Q=1, the value of P may be one or more of 3, 5, 7, 9, and 11.

It should be understood that, for the ratio $N_{ratio}$ of the bandwidth of the shared frequency resource to the bandwidth of the first data, a design degree of freedom may be increased by increasing a value of K, to design more quantities of frequency positions included in the frequency position set. Different frequency position sets corresponding to different maximum overlapping bandwidths may be designed for different quantities of sending devices and different interference requirements between a plurality of sending devices.

It should be understood that the foregoing association relationship between the first frequency resource set and/or the first frequency position set and the first parameter is merely an example provided for ease of understanding, and should not constitute any limitation on the technical solutions of this application.

In a second implementation, the sending device determines P * K sub-blocks from the shared frequency resource based on a first index sequence, and then determines the first frequency resource from the P * K sub-blocks, that is, the frequency resource to which the first data is mapped. For example, a bandwidth of each sub-block is the same as the bandwidth of each cluster of data, K clusters of data are mapped to K sub-blocks, and the K sub-blocks correspond to K clusters of frequency resources. In other words, positions of the K sub-blocks in the P* K sub-blocks is the K clusters of frequency positions in which the K clusters of data are located.

For example, the P * K sub-blocks may be referred to as a sub-shared frequency resource. For example, a bandwidth of the sub-shared frequency resource may be represented as $P * N_{TX}^{BW} = P * K * N_{Cluster}^{BW}$. In other words, the sub-shared frequency resource is divided into $P * K$ sub-blocks that are sequentially connected at a granularity of the bandwidth $N_{Cluster}^{BW}$ of each cluster of data, and a bandwidth of each sub-block is the same as the bandwidth of each cluster of data.

Optionally, the P* K sub-blocks included in the shared frequency resource may be sequentially and consecutively arranged to obtain consecutive frequency resources. In this case, frequency positions to which each cluster of data is mapped are consecutive, indicating that each cluster of data is consecutively mapped in the sub-shared frequency resource.

Optionally, indexes of the P * K sub-blocks are sequentially 0 to P * K - 1. For example, after determining the P * K sub-blocks from the shared frequency resource, the sending device may determine, based on indexes of the K sub-blocks, the K sub-blocks to which the K clusters of data are mapped, where the indexes of the K sub-blocks one-to-one correspond to the K sub-blocks. Optionally, the indexes of the K sub-blocks may be predefined, or may be indicated by higher layer signaling.

It should be understood that the bandwidth of the shared frequency resource is greater than or equal to bandwidths of the P * K sub-blocks, and the first index sequence indicates positions of the P * K sub-blocks (or the sub-shared frequency resource) in the shared frequency resource.

In an example, it is assumed that the frequency resource is represented at a granularity of an RB. The shared frequency resource includes $N_{Share}^{BW}$ RBs, and corresponds to $N_{Share}^{BW}$ RB indexes, that is, 0 to $N_{Share}^{BW} - 1$. The bandwidth of the sub-shared frequency resource includes $PKN_{Cluster}^{BW}$ RBs, and corresponds to $PKN_{Cluster}^{BW}$ RB indexes. The $PKN_{Cluster}^{BW}$ RB indexes are indexes of $PKN_{Cluster}^{BW}$ RBs of the sub-shared frequency resource in the shared frequency resource. The $PKN_{Cluster}^{BW}$ RB indexes are the first index sequence *I.*

Optionally, the first index sequence I may be an index sequence including $PKN_{Cluster}^{BW}$ indexes selected from the index 0 to the index $N_{Share}^{BW} - 1$. In other words, $N_{Share}^{BW} \geq PKN_{Cluster}^{BW}$. This is not limited in this application.

For example, the first index sequence I meets formula (6) or formula (7):

$$I = [0,1,\dots,PKN_{Cluster}^{BW} - 1] \quad (6)$$

$$I = [N_{Share}^{BW} - PKN_{Cluster}^{BW},\dots,N_{Share}^{BW} - 1] \quad (7)$$

Optionally, the first index sequence may be predefined, or indicated by higher layer signaling.

Optionally, the sending device may independently determine the first index sequence, and notify the receiving device of the first index sequence, so that the receiving device subsequently determines, based on the first index sequence, to receive the first data on the P * K sub-blocks. For example, the receiving device may perform blind detection on the P * K sub-blocks, to obtain the K clusters of data. Alternatively, the sending device may determine the first index sequence based on signaling sent by the receiving device. This is not limited in this application.

Optionally, a plurality of index sequences may be defined, and all elements in the plurality of index sequences traverse the indexes 0 to $N_{Share}^{BW} - 1$. For example, the sending device may select different index sequences as the first index sequence at different moments. For example, the sending device selects an index sequence at a granularity of a symbol or a slot. Index sequences at different moments may be predefined, or indicated by higher layer signaling.

It should be noted that the determining the sub-shared frequency resource from the shared frequency resource based on the first index sequence is merely an example provided for ease of understanding in the technical solution. Optionally, the sub-shared frequency resource may be determined from the shared frequency resource in any implementation.

It should be understood that the foregoing manners of determining the first frequency resource set and/or the first frequency position set are merely examples provided for ease of understanding, and should not constitute any limitation on the technical solutions of this application.

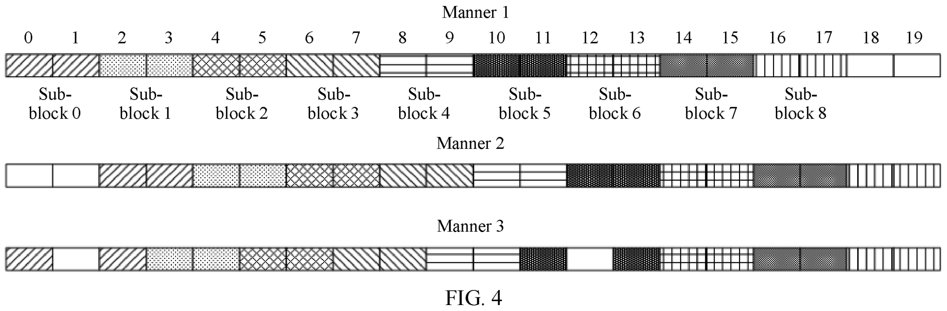

FIG. 4 is a diagram of determining P * K sub-blocks from a shared frequency resource according to an embodiment of this application. It is assumed that the frequency resource is represented at a granularity of an RB. For example, the shared frequency resource includes $N_{Share}^{BW} = 20$ RBs, and corresponding RB indexes are 0 to 19. A bandwidth of first data is $N_{TX}^{BW} = 6$ RBs, and a quantity K of clusters is 3. In this case, a bandwidth of each cluster of data is $N_{Cluster}^{BW} = 2$ RBs, and a ratio of a bandwidth of the shared frequency resource to the bandwidth of the first data is $N_{ratio}$ = 10/3. A corresponding maximum prime number P that does not exceed $N_{ratio}$ is equal to 3. A bandwidth of a sub-shared frequency resource is $PKN_{Cluster}^{BW} = 18$ RBs. In other words, the P * K sub-blocks include 18 RBs, and each sub-block includes two RBs.

As shown in FIG. 4, three manners of determining the P * K sub-blocks from the shared frequency resource are provided. In Manner 1, a first index sequence *I* meets *I* = [0,1, ...,17], where every two RBs form one sub-block. In other words, two RBs corresponding to every two values in the first index sequence I form one sub-block, and there are a total of nine sub-blocks. A sub-block 0 corresponds to RB indexes 0 and 1, a sub-block 1 corresponds to RB indexes 2 and 3, and the rest can be deduced by analogy. A sub-block 8 corresponds to RB indexes 16 and 17. In Manner 2, a first index sequence *I* meets *I* = [2, 3, ..., 19], where every two RBs form one sub-block, and there are a total of nine sub-blocks. A sub-block 0 corresponds to RB indexes 2 and 3, a sub-block 1 corresponds to RB indexes 4 and 5, and the rest can be deduced by analogy. A sub-block 8 corresponds to RB indexes 18 and 19. In Manner 3, the first index sequence *I* meets *I* = [0, 2, 3, 4, 5, 6, 7, 8,9, 10, 11, 13, 14, 15, 16, 17, 18, 19], where every two RBs form one sub-block, and there are a total of nine sub-blocks. A sub-block 0 corresponds to RB indexes 0 and 2, a sub-block 1 corresponds to RB indexes 3 and 4, and the rest can be deduced by analogy. A sub-block 5 corresponds to RB indexes 11 and 13, and a sub-block 8 corresponds to RB indexes 18 and 19.

It can be learned from the foregoing Manner 1 and Manner 2 that when index values in the first index sequence I are consecutive, that is, positions of sub-shared frequency resources in the shared frequency resource are consecutive, positions of the sub-blocks in the shared frequency resource are consecutive, and positions of one of K clusters of data are also consecutive in the shared frequency resource. It can be learned from the foregoing Manner 3 that, when index values in the first index sequence I are inconsecutive, that is, positions of sub-shared frequency resources in the shared frequency resource are inconsecutive, positions of one or more sub-blocks in the shared frequency resource are inconsecutive, and positions of one of the K clusters of data are also inconsecutive in the shared frequency resource.

It should be understood that the foregoing three manners shown in FIG. 4 are merely examples provided for ease of understanding, and do not constitute any limitation on the technical solutions of this application. Optionally, adjacent sub-blocks may be inconsecutive. For example, frequency positions between the sub-block 1 and the sub-block 2 may be inconsecutive. In addition, the RB indexes included in the first index sequence I used to determine the P * K sub-blocks may be consecutive or inconsecutive. This is not limited in this application.

Based on the foregoing implementation, the sending device may determine the P * K sub-blocks from the shared frequency resource. For example, the first data includes K clusters of data, and each cluster of data may be mapped to one of the P * K sub-blocks, that is, one sub-block in the sub-block 0 to the sub-block 8. Therefore, as long as RB indexes corresponding to the K sub-blocks to which the K clusters of data are mapped are determined, a position, including a start position and an end position, of each element of each cluster of data is determined, and a frequency resource to which the first data is mapped may be determined.

Optionally, the sending device may independently determine, from the P * K sub-blocks, the K sub-blocks used to map the K clusters of data, and notify the receiving device, so that the receiving device subsequently receives the K clusters of data on the K sub-blocks. Alternatively, the sending device may receive higher layer signaling, and determine, based on the higher layer signaling, a specific sub-block position to which the K clusters of data are mapped. This is not limited in this application.

Optionally, a bandwidth of each sub-block may be greater than a bandwidth of each cluster of data. For example, a bandwidth of each sub-block is $N_{Subblock}^{BW}$, and $N_{Subblock}^{BW} > N_{Cluster}^{BW}$.

The following describes an example of a manner of generating the first frequency position set and a frequency position included in the first frequency position set.

For example, the first frequency position set $S_{set}$ satisfies:

$$S_{set} = \{S_0, \ldots, S_{N_f-1}\} \qquad (8)$$

Optionally, the $N_f$ frequency positions in the first frequency position set $S_{set}$ may be arranged in any order.

An mth frequency position $S_m$ may include K clusters of frequency positions, which satisfies:

$$S_m = [S_m(0), \ldots, S_m(K-1)] \qquad (9)$$

Herein, $S_m$ represents an $m$[th] frequency position in the first frequency position set $S_{set}$, $N_f$ represents a quantity of included frequency positions, m = 0, ... , $N_f$ - 1, $S_m(k)$ represents a kth cluster of frequency positions in the mth frequency position, and is used to map the kth cluster of data, and k = 0, ..., K - 1. Specifically, a value of $S_m(k)$ may represent an index of a sub-block that is in the P * K sub-blocks and to which the kth cluster of data is mapped.

In an implementation, for a given ratio $N_{ratio}$ of the bandwidth of the shared frequency resource to the bandwidth of the first data, the second overlapping ratio L, and K, Q=2, that is, two frequency resources are determined based on any two frequency positions, and frequency bandwidth in which the two frequency resources overlap is less than or equal to the first threshold (that is, the maximum overlapping bandwidth).

A kth cluster of frequency positions $S_{\sum_{l=0}^{L} P^l * i_l}(k)$ in a $\sum_{l=0}^{L}(P^l * i_l)^{th}$ frequency position in the first frequency position set $S_{set}$ satisfies:

$$S_{\sum_{l=0}^{L}(P^l * i_l)}(k) = k * P + \left(\sum_{l=0}^{L}(k^l * i_l)\right) \bmod P \qquad (10)$$

or

$$X_{\sum_{l=0}^{L}(P^l * i_l)}(k) = k * P + \left(\sum_{l=0}^{L}(k^l * i_l)\right) \bmod P \qquad (11)$$

$$S_{\sum_{l=0}^{L}(P^l * i_l)}(k) = Y\left(X_{\sum_{l=0}^{L}(P^l * i_l)}(k)\right) \qquad (12)$$

or

$$S_{\sum_{l=0}^{L}(P^l * i_l)}(k) = k * P + (\sum_{l=0}^{L}(k^l * i_l) + \Delta_1)\bmod P \qquad (13)$$

or

$$S_{\sum_{l=0}^{L}(P^l * i_l)}(k) = k * P + (\sum_{l=0}^{L}\Delta_2(k^l * i_l))\bmod P \qquad (14)$$

or

$$S_{\sum_{l=0}^{L}(P^l * i_l)}(k) = k * P + (\sum_{l=0}^{L}\Delta_2(k^l * i_l) + \Delta_1)\bmod P \qquad (15)$$

Herein, the $k^{th}$ cluster of frequency positions corresponds to a $k^{th}$ cluster of data in the K clusters of data included in the first data, P represents the maximum prime number less than or equal to the ratio $N_{ratio}$ of the bandwidth of the shared frequency resource to the bandwidth of the first data, L represents a ratio of the first threshold to a bandwidth of each cluster of data in the K clusters of data, K represents the quantity of clusters of data included in the first data, L is an integer and $0 \le L \le K-1$, $i_l = 0, ..., P-1$, $N_f = P^{L+1}$, $k = 0, ..., K-1$, Y includes P * K elements, a value of any one of the P * K elements is one of 0 to P * K - 1, values of any two of the P * K elements are different, and $\Delta_1$ and $\Delta_2$ are offsets and may be predefined or indicated by signaling. Optionally, $\Delta_1$ and $\Delta_2$ are integers.

Optionally, the sending device may process the $\sum_{l=0}^{L}(P^l * i_l)^{th}$ frequency position $S_{\sum_{l=0}^{L}P^l * i_l}$ based on the sequence Y to obtain a sequence $Z_{\sum_{l=0}^{L}(P^l * i_l)}$.

Optionally, the sending device may use the sequence $Z_{\sum_{l=0}^{L}(P^l * i_l)}$ as the $\sum_{l=0}^{L}(P^l * i_l)^{th}$ frequency position. In other words, a $k^{th}$ element of the sequence $Z_{\sum_{l=0}^{L}(P^l * i_l)}$ is a $k^{th}$ cluster of frequency positions of the $\sum_{l=0}^{L}(P^l * i_l)^{th}$ frequency position.

Specifically, sequences $Z_{\sum_{l=0}^{L}(P^l * i_l)}$ and $S_{\sum_{l=0}^{L}(P^l * i_l)}$ meet:

$$Z_{\sum_{l=0}^{L}(P^l * i_l)}(k) = Y\left(S_{\sum_{l=0}^{L}(P^l * i_l)}(k)\right) \qquad (16)$$

It should be understood that the sequence Y may be a sequence obtained by randomly changing an order of elements in a sequence [0, 1, ..., and P * K - 1]. A value of L may be an integer from 0 to K-1. Based on the foregoing formula (10) to formula (15), for one first frequency position set, only one value can be selected for L; or for different first frequency position sets, L correspondingly has different values.

For example, when L = 1, the formula (10) may be expressed as:

$$S_{i_1 * P + i_0}(k) = k * P + (k * i_1 + i_0)\bmod P \qquad (17)$$

Herein, $i_0, i_1 = 0, 1, ..., P-1$, indicating that $i_0$ and $i_1$ may independently traverse 0 to P-1. It can be learned that there are a total of $P^2$ different combinations $< i_0, i_1 >$ formed by values of $i_0$ and $i_1$, and $P^2$ different frequency positions may be generated correspondingly.

For example, when L = 2, the formula (10) may be expressed as:

$$S_{i_2 * P^2 + i_1 * P + i_0}(k) = k * P + (k^2 * i_2 + k * i_1 + i_0)\bmod P \qquad (18)$$

For example, when L = 3, the formula (10) may be expressed as:

$$S_{i_3*P^3+i_2*P^2+i_1*P+i_0}(k) = k*P + (k^3*i_3 + k^2*i_2 + k*i_1 + i_0) \bmod P \qquad (19)$$

It may be learned from the formula (10) that, for different ratios $N_{ratio}$, second overlap ratios L, and quantities K of clusters of data included in the first data, different frequency position sets may be generated, and quantities and values of frequency positions included in different frequency position sets may also be different.

Optionally, values of $N_{ratio}$, L, and K may be predefined, or indicated by higher layer signaling, so that a plurality of frequency position sets may be obtained, to adapt to scenarios with different quantities of access devices and scenarios with different interference requirements.

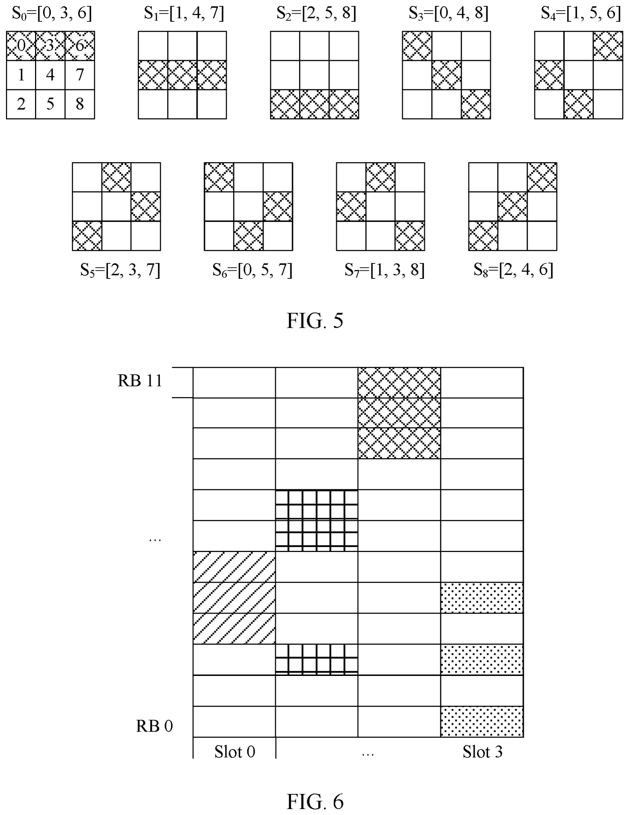

FIG. 5 is a diagram of a mapping relationship between a first frequency resource and first data according to an embodiment of this application. It is assumed that the ratio of the bandwidth of the shared frequency resource to the bandwidth of the first data is $N_{ratio}$ = 3. The second overlapping ratio L = 1, the quantity K of clusters of data included in the first data is 3, and Q is 2. It can be learned that P=3, the quantity of sub-blocks included in the shared frequency resource is P*K=9, and corresponding numbers are 0 to 8, that is, sub-block indexes. In this case, it can be learned from the foregoing formula (10) that there are a total of $P^2$ = 9 frequency positions, and the nine frequency positions are shown in FIG. 5. For example, the nine sub-blocks are arranged in a form of P rows and K columns (that is, 3 rows and 3 columns), and start to be sequentially arranged from a first column, that is, S0=[0, 3, 6], ..., and S8=[2, 4, 6]. One grid in each frequency position corresponds to a position of one cluster, that is, corresponds to one sub-block shown in FIG. 4. It can be learned from FIG. 5 that an overlapping bandwidth between any two of the nine frequency positions does not exceed $N_{Cluster}^{BW}$ (corresponding to L = 1), that is, does not exceed a bandwidth of a cluster of data.

Optionally, the frequency positions in the first frequency position set may be a subset of all frequency positions determined in the foregoing manner.

Optionally, for Q=2, and L = 0, it indicates that any two frequency positions in the first frequency position set are orthogonal and do not overlap. Alternatively, for Q=2, and L = K - 1, the sending device may determine a sub-shared frequency resource from the shared frequency resource, where a bandwidth of the sub-shared frequency resource is $\lfloor N_{ratio} \rfloor * N_{TX}^{BW} = K * \lfloor N_{ratio} \rfloor * N_{Cluster}^{BW}$ . Further, the sending device determines, from the sub-shared frequency resource based on the frequency position, the frequency resource to which the first data is mapped. For a specific implementation of determining the sub-shared frequency resource from the shared frequency resource, refer to the foregoing related descriptions. Details are not described herein again.

For example, for Q=2, and L = 0, the frequency position in the first frequency position set may be represented as:

$$S_{i_0}(k) = k\lfloor N_{ratio} \rfloor + i_0, i_0 = 0,1,\ldots, \lfloor N_{ratio} \rfloor - 1 \qquad (20)$$

For example, for Q=2, and L = K - 1, a frequency position index m in the first frequency position set may be represented as:

$$m = \sum_{k=0}^{K-1} \binom{S_{m(k-1)}}{k+1} = \binom{S_{m(K-1)}}{K} + \cdots + \binom{S_{m(1)}}{2} + \binom{S_{m(0)}}{1} \qquad (21)$$

Herein, $\binom{A}{B}$ represents a quantity of combinations of B different values extracted from A different values. In other words, the extracted B different values form a combination, and $\binom{0}{B} = 0$ . A value of m is 0, ..., and $\binom{\lfloor N_{ratio} \rfloor * K}{K} - 1$ , and the first frequency position set includes $\binom{\lfloor N_{ratio} \rfloor * K}{K}$ frequency positions.

In a second implementation, when the second overlapping ratio L = 1, Q=3, that is, three frequency resources determined based on any three frequency positions. When a sum of bandwidths of overlapping frequency resources between any one of the three frequency resources and remaining two frequency resources is less than or equal to the first threshold (that is, the maximum overlapping bandwidth), a $k^{th}$ cluster of frequency positions $S_{i_1P+i_0}(k)$ in an $i_1P + i_0{}^{th}$ frequency position in the first frequency position set satisfies:

$$S_{i_1*P+i_0}(k) = k*P + (k*i_1 + i_0) \bmod P \qquad (22)$$

Herein, $i_0$ = 0,1, ..., $P$ - 1, $i_1$ = 0,1, and L $\leq K$ - 1. In this case, the first frequency position set includes 2 * $P$ different frequency positions.

In a third implementation, when the second overlapping ratio $L$ = 2, Q=3, that is, three frequency resources determined based on any three frequency positions. When a sum of bandwidths of overlapping frequency resources between any one of the three frequency resources and remaining two frequency resources is less than or equal to the first threshold (that is, the maximum overlapping bandwidth), a k$^{th}$ cluster of frequency positions in an $i_1$ * $P$ + $i_0$$^{th}$ frequency position in the first frequency position set satisfies:

$$S_{i_1*P+i_0}(k) = k * P + (k * i_1 + i_0) \bmod P \quad (23)$$

Herein, $S_{i_1*P+i_0}(k)$ represents a k$^{th}$ cluster of frequency positions in the $i_1$ * $P$ + $i_0$$^{th}$ frequency position in the first frequency position set, $i_0$, $i_1$ = 0, 1, ..., $P$ - 1, and $L \leq K$ - 1. In this case, the first frequency position set includes $P^2$ different frequency positions.

It should be understood that the foregoing first frequency position sets determined for different values of L and Q are merely examples provided for ease of understanding, and should not constitute any limitation on the technical solutions of this application.

Optionally, the method 300 may further include the following steps S302 to S304.

In other words, after determining the first frequency resource, for different transmission moments, the sending device may select different frequency resources (for example, a second frequency resource) in a frequency hopping manner to transmit the first data, to randomize data interference between sending devices. For example, the first frequency resource may be determined in step S310, and the sending device may determine the second frequency resource occupied for transmitting the first data at a next moment. Frequency positions to which the first data is mapped at different time domain positions may change, and frequency positions corresponding to the different time domain positions may form a frequency hopping pattern.

S302: The sending device determines to enable frequency hopping.

For example, the base station may indicate, to the UE through indication information (for example, RRC or DCI signaling), whether to perform frequency hopping. For example, 1-bit signaling is used. When a value of a bit is 1, it indicates that frequency hopping is enabled (that is, frequency hopping is performed); or when a value of the bit is 0, it indicates that frequency hopping is not enabled.

S303: The sending device determines a frequency position index of the second frequency resource based on the identifier of the sending device, where the second frequency resource and the first frequency resource are in different time units.

In a first implementation, the sending device determines, based on the identifier of the sending device, a second frequency position (that is, a frequency position of the second frequency resource) or a second frequency position index corresponding to the second frequency position. For example, the sending device determines the second frequency position or the second frequency position index based on the identifier of the sending device and a time unit in which the second frequency resource is located.

Specifically, the second frequency position index $m_2$ may be represented as:

$$m_2 = \left(n_{ID}^{hop} * \Delta_{hop,1} + i_{unit} + \Delta_{hop,2}\right) \bmod N_f \quad (24)$$

or

$$m_2 = \left(n_{ID}^{hop} * \Delta_{hop,1} * i_{unit} + \Delta_{hop,2}\right) \bmod N_f \quad (25)$$

Herein, $n_{ID}^{hop}$ represents the identifier of the sending device, $i_{unit}$ represents an index of the time unit, and represents an index of the time unit in which the second frequency resource is located, and $\Delta_{hop,1}$ and $\Delta_{hop,2}$ are offsets. $\Delta_{hop,1}$ and $\Delta_{hop,2}$ may be predefined, or may be indicated by higher layer signaling. Optionally, a value of $\Delta_{hop,1}$ and/or $\Delta_{hop,2}$ is related to the index of the time unit.

Optionally, the second frequency position index is determined based on the first frequency position index.

Specifically, the second frequency position index $m_2$ may be represented as:

$$m_2 = \left(n_{ID}^{hop} * \Delta_{hop,1} + i_{unit} + \Delta_{hop,2} + m_1\right) \bmod N_f \quad (26)$$

or

$$m_2 = \left(n_{ID}^{hop} * \Delta_{hop,1} * i_{unit} + \Delta_{hop,2} + m_1\right) \bmod N_f \qquad (27)$$

Herein, $m_1$ is the first frequency position index.

Optionally, the sending device sends the first data in at least one time unit.

Optionally, when the sending device sends the first data in a time unit, the sending device sends the first data on the first frequency resource in the time unit; or when the sending device sends the first data in at least two time units, the sending device sends the first data on a first frequency resource in a start time unit in the at least two time units, and sends the second data on a second frequency resource in the other time unit.

For example, when the sending device sends the first data in three time units, and indexes of the time units are 0 to 2, the sending device sends the first data on the first frequency resource in a time unit 0, and sends the first data on the second frequency resource in a time unit 1 and the second frequency resource in a time unit 2. The second frequency position index $m_2$ corresponding to the time unit 1 is determined based on the identifier of the sending device and an index 1 of the time unit, and the second frequency position index $m_2$ corresponding to the time unit 2 is determined based on the identifier of the sending device and an index 2 of the time unit.

For example, the sending device sends the first data on at least one symbol. The symbol may be an OFDM symbol or a single carrier frequency division multiple access (Single Carrier Frequency Division Multiple Access, SC-FDMA) symbol. This is not limited in this application.

Optionally, a time domain position (that is, the index of the time unit) of the first data may be an index of a symbol and/or an index of a slot.

Optionally, when the sending device transmits the first data in $L_{symb} > 1$ symbols, the sending device may determine the index of the second frequency position based on the identifier of the sending device and the index of the symbol, to determine the second frequency resource to which the first data is mapped. For example, the index of the second frequency position is determined based on an index $l_{symb}$ ($l_{symb} = 0, \dots, L_{symb}$ - 1) of an $l_{symb}$th symbol in the $L_{symb}$ symbols and the identifier of the sending device.

Optionally, when the sending device transmits the first data in $N_{slot} > 1$ slots, the sending device may determine the index of the second frequency position based on the identifier of the sending device and the index of the slot, to determine the second frequency resource to which the first data is mapped. For example, the index of the second frequency position is determined based on an index $n_s$ ($n_s = 0, \dots, N_{slot}$ - 1) of an $n_s$th slot in the $N_{slot}$ slots and the identifier of the sending device.

In a second implementation, the sending device determines, based on a pseudo-random sequence, the second frequency position index corresponding to the second frequency resource, where the pseudo-random sequence is a Gold sequence (Gold sequence) or an m sequence, and initialization of the pseudo-random sequence is determined based on the identifier of the sending device.

Specifically, the second frequency position index $m_2$ may be represented as:

$$m_2 = \left(f_{hop} + \Delta_{hop,2}\right) \bmod N_f \qquad (28)$$

or

$$m_2 = \left(f_{hop} + n_{ID}^{hop} + \Delta_{hop,2}\right) \bmod N_f \qquad (29)$$

$f_{hop}$ is obtained based on the pseudo-random sequence.

For example, $f_{hop}$ may be expressed as:

$$f_{hop} = \left[\sum_{i=0}^{M_{bit}-1} 2^i * c(\Delta_{bit,1} * i_{unit} + \Delta_{bit,2} + i)\right] \bmod N_f \qquad (30)$$

Herein, $M_{bit}$ is an integer, and may be predefined. $\Delta_{bit,1}$ and $\Delta_{bit,2}$ are offsets, and may be predefined or indicated by signaling. $c(\Delta_{bit,1} * i_{unit} + \Delta_{bit,2} + i)$ indicates a $\Delta_{bit,1} * i_{unit} + \Delta_{bit,2} + i$th value of the pseudo-random sequence.

Optionally, when the time domain position of the first data is an index $l_{symb}$ of a symbol and an index $n_s$ of a slot, $f_{hop}$ may be represented as:

$$f_{hop} = \left[\sum_{i=0}^{M_{bit}-1} 2^i * c(\Delta_{bit,1} * n_s + \Delta_{bit,3} * l_{symb} + \Delta_{bit,2} + i)\right] \bmod N_f \quad (31)$$

Herein, $\Delta_{bit,1}$, $\Delta_{bit,2}$, and $\Delta_{bit,3}$ are offsets, and may be predefined or indicated by signaling.

For example, a value $c_{init}$ for initialization of the pseudo-random sequence may be represented as:

$$c_{init} = n_{ID}^{hop} \quad (32)$$

or

$$c_{init} = n_{ID}^{hop} + n_{ID}^{conf} \quad (33)$$

Herein, $n_{ID}^{conf}$ may be an identifier of a cell, or may be indicated by signaling.

Optionally, the sending device determines the first frequency position or the first frequency position index based on the identifier of the sending device and a time unit in which the first frequency resource is located. In this case, in the foregoing method for determining the second frequency position index, the index of the time unit may be an index of the time unit in which the first frequency resource is located.

For example, the first frequency position index may be determined based on a method in formula (24) or (25). In this case, $i_{unit}$ represents the index of the time unit, and $i_{unit}$ may be the index of the time unit in which the first frequency resource is located or the index of the time unit in which the second frequency resource is located.

S304: The sending device sends the first data to the receiving device on the second frequency resource, and correspondingly, the receiving device receives the first data from the sending device on the second frequency resource.

FIG. 6 is a diagram of a frequency hopping pattern according to an embodiment of this application. As shown in FIG. 6, in an example in which one time domain resource unit is one slot, a bandwidth of one cluster of data is one RB, and a quantity K of clusters of data is 3, the sending device may determine the first frequency resource based on step S301 in the foregoing method 300, and determine the second frequency resource based on step S303. For example, the sending device determines that the time-frequency resources (that is, frequency positions corresponding to different slots) used to transmit the first data are as follows: The first frequency resource is frequency positions of a slot 0: an RB 3 to an RB 5, and the second frequency resource is separately frequency positions of a slot 1: an RB 2, an RB 6, and an RB 7, frequency positions of a slot 2: an RB 9 to an RB 11, and frequency positions of a slot 3: an RB 0, the RB 2, and the RB 4. It can be learned that transmission bandwidths of the first data in the slot 0 to the slot 3 are the same, and frequency positions (between different clusters) in each slot may be consecutive or inconsecutive. This is not limited in this application.

It should be understood that when frequency hopping is enabled, a frequency position to which the first data is mapped may change with different time units, to form frequency hopping. For example, the sending device sequentially sends the first data at the first frequency position in the slot #0 and the second frequency position in the slot #1. Frequency hopping patterns determined by different sending devices may be different, so that interference between data sent by different sending devices can be randomized, to avoid that data sent by a sending device in a cell is always interfered with by high-power to-be-sent data of a sending device in another cell, and improve system transmission performance.

S320: The receiving device determines the first frequency resource.

For a specific implementation in which the receiving device determines the first frequency resource, refer to related descriptions of the sending device. For example, refer to the foregoing steps S310 and S301. For brevity, details are not described herein again.

Optionally, for an implementation in which the receiving device determines the second frequency resource when the sending device transmits the first data through frequency hopping, refer to related descriptions of step S303. For brevity, details are not described herein again. Optionally, the sending device may also notify the receiving device of the determined second frequency resource, so that the receiving device separately receives the first data from the sending device at different moments.

S330: The sending device sends the first data on the first frequency resource, and correspondingly, the receiving device receives the first data from the sending device.

According to the solutions provided in this application, an adaptive frequency resource set is designed, so that a bandwidth of an overlapping frequency resource between at least two frequency resources in the frequency resource set is greater than 0, and a bandwidth of an overlapping frequency resource between any two frequency resources is less than or equal to a first threshold, to reduce interference during data transmission of sending devices. In addition, more frequency resources can be designed to support a larger quantity of sending devices, to achieve higher flexibility.

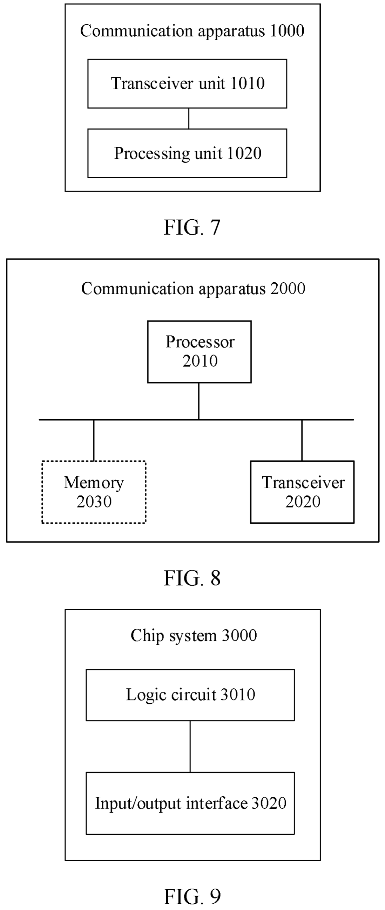

The foregoing describes in detail embodiments on a communication method side in this application with reference to FIG. 1 to FIG. 6. The following describes in detail embodiments on a communication apparatus side in this application with reference to FIG. 7 and FIG. 8. It should be understood that descriptions of the apparatus embodiments correspond to the descriptions of the method embodiments, and therefore for a part that is not described in detail, refer to the foregoing method embodiments.

FIG. 7 is a block diagram of a communication apparatus 1000 according to an embodiment of this application. As shown in FIG. 7, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement steps or procedures performed by the sending device in the foregoing method embodiments. The processing unit 1020 is configured to perform an operation related to processing of the sending device in the foregoing method embodiments. The transceiver unit 1010 is configured to perform an operation related to receiving and sending of the sending device in the foregoing method embodiments.

In another possible design, the apparatus 1000 may implement steps or procedures performed by the receiving device in the foregoing method embodiment. The processing unit 1020 is configured to perform an operation related to processing of the receiving device in the foregoing method embodiment, and the transceiver unit 1010 is configured to perform an operation related to receiving and sending of the receiving device in the foregoing method embodiment.

It should be understood that the apparatus 1000 herein is implemented in a form of a functional unit. The term "unit" herein may be an application-specific integrated circuit (application specific integrated circuit, ASIC), an electronic circuit, a processor (for example, a shared processor, a special purpose processor, or a group processor) configured to execute one or more software or firmware programs, a memory, a combinational logic circuit, and/or other appropriate components that support the described functions. In an optional example, a person skilled in the art can understand that the apparatus 1000 may be specifically the transmit end in the foregoing embodiments, and may be configured to perform the procedures and/or steps corresponding to the transmit end in the foregoing method embodiments; or the apparatus 1000 may be specifically the receive end in the foregoing embodiments, and may be configured to perform the procedures and/or steps corresponding to the receive end in the foregoing method embodiments. To avoid repetition, details are not described herein again.

The apparatus 1000 in the foregoing solutions has a function of implementing the corresponding steps performed by the transmit end in the foregoing methods. Alternatively, the apparatus 1000 in the foregoing solutions has a function of implementing the corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 7 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 8 is a block diagram of a communication apparatus 2000 according to an embodiment of this application. As shown in FIG. 8, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

In a possible implementation, the apparatus 2000 is configured to implement procedures and steps corresponding to the sending device in the foregoing method embodiments.

In another possible implementation, the apparatus 2000 is configured to implement procedures and steps corresponding to the receiving device in the foregoing method embodiments.

It should be understood that the apparatus 2000 may be specifically a transmit end or a receive end in the foregoing embodiments, or may be a chip or a chip system. Correspondingly, the transceiver 2020 may be a transceiver circuit of the chip. This is not limited herein. Specifically, the device 2000 may be configured to perform the steps and/or procedures corresponding to the transmit end or the receive end in the foregoing method embodiments.

Optionally, the memory 2030 may include a read-only memory and a random access memory, and provide instructions and data for the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

In an implementation process, steps in the foregoing methods may be completed by using an integrated logic circuit of hardware in the processor or by using instructions in a form of software. Steps of the methods disclosed with reference to embodiments of this application may be directly executed and accomplished by a hardware processor, or may be executed and accomplished by using a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps of the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be completed by using an integrated logic circuit of hardware in the processor or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. Steps of the methods disclosed with reference to embodiments of this application may be directly executed and accomplished by a hardware decoding processor, or may be executed and accomplished by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps of the foregoing method in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the memory of the systems and methods described in this specification includes but is not limited to these and any other memories of appropriate types.

FIG. 9 is a block diagram of a chip system 3000 according to an embodiment of this application. As shown in FIG. 9, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled to and connected to a storage unit, and invoke instructions in the storage unit, to enable the chip system 3000 to implement the methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement operations performed by the sending device in the foregoing method embodiments.

For example, the logic circuit 3010 is configured to implement an operation related to processing performed by the sending device in the foregoing method embodiments, for example, the operation related to processing performed by the sending device in the embodiment shown in FIG. 3. The input/output interface 3020 is configured to implement an operation related to sending and/or receiving performed by the sending device in the foregoing method embodiments, for example, the operation related to sending and/or receiving performed by the sending device in the embodiment shown in FIG. 3.

In another solution, the chip system 3000 is configured to implement operations performed by the receiving device in the foregoing method embodiments.

For example, the logic circuit 3010 is configured to implement an operation related to processing performed by the receiving device in the foregoing method embodiments, for example, the operation related to processing performed by the receiving device in the embodiment shown in FIG. 3. The input/output interface 3020 is configured to implement an operation related to sending and/or receiving performed by the receiving device in the foregoing method embodiments, for example, the operation related to sending and/or receiving performed by the receiving device in the embodiment shown in FIG. 3.

An embodiment of this application further provides a computer-readable storage medium. The computer-readable storage medium stores computer instructions used to implement the method performed by the device (for example, the sending device or the receiving device) in the foregoing method embodiments.

An embodiment of this application further provides a computer program product, including instructions. When the instructions are executed by a computer, the method performed by the device (for example, the sending device or the receiving device) in the foregoing method embodiments is implemented.

An embodiment of this application further provides a communication system. The communication system includes the sending device or the receiving device in the foregoing method embodiments.

For explanations and beneficial effects of related content in any one of the apparatuses provided above, refer to the corresponding method embodiment provided above. Details are not described herein again.

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in a form of a software function unit and sold or used as an independent product, the functions may be stored in a computer readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or an apparatus) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** A communication method, comprising:

determining a first frequency resource corresponding to first data, wherein the first frequency resource is a frequency resource in a first frequency resource set, the first frequency resource set comprises $N_f$ frequency resources, any two of the $N_f$ frequency resources are different, a bandwidth of an overlapping frequency resource between at least two of the $N_f$ frequency resources is greater than 0, a bandwidth of an overlapping frequency resource between any two of the $N_f$ frequency resources is less than or equal to a first threshold, and $N_f$ is an integer greater than or equal to 2; and

sending the first data on the first frequency resource.

2. The method according to claim 1, wherein that any two of the $N_f$ frequency resources are different comprises:

any two of the $N_f$ frequency resources partially overlap; or
any two of the $N_f$ frequency resources do not overlap at all.

3. The method according to claim 1 or 2, wherein that the bandwidth of the overlapping frequency resource between any two of the $N_f$ frequency resources is less than or equal to the first threshold comprises:
a sum of bandwidths of overlapping frequency resources between any one of Q frequency resources and remaining Q-1 frequency resources is less than or equal to the first threshold, wherein the Q frequency resources are comprised in the $N_f$ frequency resources, Q is an integer, and $2 \leq Q \leq N_f$.

4. The method according to any one of claims 1 to 3, wherein the first threshold is less than a bandwidth of the first data.

5. The method according to any one of claims 1 to 4, wherein determining the first frequency resource corresponding to the first data comprises:

determining a first frequency position index; and
determining the first frequency resource in the first frequency resource set based on the first frequency position index.

6. The method according to claim 5, wherein the method further comprises:
determining the first frequency resource set.

7. The method according to claim 6, wherein determining the first frequency resource set comprises:

determining a first frequency resource set index; and
determining the first frequency resource set from N frequency resource sets based on the first frequency resource set index, wherein N is an integer greater than 1.

8. The method according to any one of claims 5 to 7, wherein the first frequency resource set corresponds to a first frequency position set, the first frequency position set comprises $N_f$ frequency positions, and the $N_f$ frequency positions one-to-one correspond to the $N_f$ frequency resources; and
determining the first frequency resource in the first frequency resource set based on the first frequency position index comprises:

determining a first frequency position in the first frequency position set based on the first frequency position index; and
determining the first frequency resource based on the first frequency position.

9. The method according to claim 8, wherein the first frequency resource set and/or the first frequency position set are/is associated with a first parameter, and the first parameter comprises one or more of the following:

a bandwidth of a shared frequency resource, the bandwidth of the first data, the first threshold, a quantity K of clusters of data comprised in the first data, the quantity $N_f$ of frequency resources comprised in the first frequency resource set, or Q, wherein
the first threshold indicates an upper limit of a sum of bandwidths of overlapping frequency resources between the Q frequency resources.

10. The method according to claim 8 or 9, wherein the method further comprises:
determining the first frequency resource set and/or the first frequency position set.

11. The method according to claim 10, wherein the first frequency resource set and/or the first frequency position set are/is associated with the bandwidth of the shared frequency resource and the bandwidth of the first data; and

determining the first frequency resource set and/or the first frequency position set comprises:
determining the first frequency resource set and/or the first frequency position set based on a ratio of the bandwidth of the shared frequency resource to the bandwidth of the first data.

12. The method according to any one of claims 9 to 11, wherein the first frequency resource set and/or the first frequency position set are/is associated with K; and

K satisfies:

$$K \leq P \leq N_{ratio},$$

wherein
$N_{ratio}$ represents the ratio of the bandwidth of the shared frequency resource to the bandwidth of the first data, and
P represents a maximum prime number less than or equal to $N_{ratio}$.

13. The method according to claim 12, wherein the shared frequency resource comprises P * K sub-blocks, the first data comprises K clusters of data, bandwidths of any two of the K clusters of data are the same, and a bandwidth of each sub-block is the same as a bandwidth of each cluster of data; and
the first frequency resource comprises K clusters of frequency resources, the first frequency position comprises K clusters of frequency positions, the K clusters of frequency resources one-to-one correspond to the K clusters of frequency positions, and the K clusters of frequency positions are positions of K sub-blocks in the P* K sub-blocks.

14. The method according to claim 13, wherein the method further comprises:
determining the P * K sub-blocks from the shared frequency resource based on a first index sequence.

15. The method according to any one of claims 8 to 14, wherein

the first frequency position set $S_{set}$ satisfies:

$$S_{set} = \{S_0, \dots, S_{N_f-1}\},$$

wherein
$S_m$ represents an $m^{th}$ frequency position in the first frequency position set $S_{set}$, $m = 0, \dots, N_f$- 1, $S_m(k)$ represents a $k^{th}$ cluster of frequency positions in the $m^{th}$ frequency position, $k = 0, \dots, K$- 1, and $S_m(k)$ is related to the bandwidth of the shared frequency resource, the bandwidth of the first data, the first threshold, and the quantity K of clusters of data comprised in the first data.

16. The method according to claim 15, wherein

a $k^{th}$ cluster of frequency positions $S_{\sum_{l=0}^{L}(P^l * i_l)}(k)$ in a $\sum_{l=0}^{L}(P^l * i_l)^{th}$ frequency position in the first frequency position set $S_{set}$ satisfies:

$$S_{\sum_{l=0}^{L}(P^l * i_l)}(k) = k * P + \left(\sum_{l=0}^{L}(k^l * i_l)\right) \bmod P,$$

or

$$X_{\sum_{l=0}^{L}(P^l * i_l)}(k) = k * P + \left(\sum_{l=0}^{L}(k^l * i_l)\right) \bmod P,$$

and

$$S_{\sum_{l=0}^{L}(P^l * i_l)}(k) = Y\left(X_{\sum_{l=0}^{L}(P^l * i_l)}(k)\right),$$

wherein

the $k^{th}$ cluster of frequency positions corresponds to a $k^{th}$ cluster of data in the K clusters of data comprised in the first data, P represents the maximum prime number less than or equal to the ratio $N_{ratio}$ of the bandwidth of the shared frequency resource to the bandwidth of the first data, L represents a ratio of the first threshold to a bandwidth of each cluster of data in the K clusters of data, K represents the quantity of clusters of data comprised in the first data, L is an integer and $0 \leq L \leq K - 1$, $i_l = 0, ..., P - 1$, $N_f = P^{L+1}$, $k = 0, ..., K - 1$, $Y$ comprises $P * K$ elements, a value of any one of the $P * K$ elements is one of 0 to $P * K - 1$, and values of any two of the $P * K$ elements are different.

17. The method according to any one of claims 1 to 16, wherein the method further comprises:

determining to enable frequency hopping;
determining a frequency position index of a second frequency resource based on an identifier of a sending device, wherein the second frequency resource and the first frequency resource are in different time units; and
sending the first data on the second frequency resource.

18. The method according to claim 17, wherein determining the frequency position index of the second frequency resource based on the identifier of the sending device comprises:

determining the frequency position index of the second frequency resource based on the identifier of the sending device and a time unit in which the second frequency resource is located; or
determining the frequency position index of the second frequency resource based on a pseudo-random sequence, wherein the pseudo-random sequence is a Gold (Gold) sequence or an m sequence, and initialization of the pseudo-random sequence is determined based on the identifier of the sending device.

19. A communication method, comprising:

determining a first frequency resource, wherein the first frequency resource is a frequency resource in a first frequency resource set, the first frequency resource set comprises $N_f$ frequency resources, any two of the $N_f$ frequency resources are different, a bandwidth of an overlapping frequency resource between at least two of the $N_f$ frequency resources is greater than 0, a bandwidth of an overlapping frequency resource between any two of the $N_f$ frequency resources is less than or equal to a first threshold, and $N_f$ is an integer greater than or equal to 2; and
receiving first data on the first frequency resource.

20. The method according to claim 19, wherein the method further comprises:
sending a first frequency resource set index, wherein the first frequency resource set index is used to determine the first frequency resource set from N frequency resource sets, and N is an integer greater than 1.

21. The method according to claim 19 or 20, wherein the method further comprises:
sending a first frequency position index, wherein the first frequency position index is used to determine the first frequency resource in the first frequency resource set.

22. The method according to any one of claims 19 to 21, wherein that any two of the $N_f$ frequency resources are different comprises:

any two of the $N_f$ frequency resources partially overlap; or
any two of the $N_f$ frequency resources do not overlap at all.

23. The method according to any one of claims 19 to 22, wherein that the bandwidth of the overlapping frequency resource between any two of the $N_f$ frequency resources is less than or equal to the first threshold comprises:
a sum of bandwidths of overlapping frequency resources between any one of Q frequency resources and remaining Q-1 frequency resources is less than or equal to the first threshold, wherein the Q frequency resources are comprised in the $N_f$ frequency resources, Q is an integer, and $2 \leq Q \leq N_f$.

24. The method according to any one of claims 19 to 23, wherein the first threshold is less than a bandwidth of the first data.

25. The method according to any one of claims 19 to 24, wherein the first frequency resource set corresponds to a first frequency position set, the first frequency position set comprises $N_f$ frequency positions, and the $N_f$ frequency positions one-to-one correspond to the $N_f$ frequency resources; and
the first frequency resource set and/or the first frequency position set are/is associated with a first parameter, and the first parameter comprises one or more of the following:

a bandwidth of a shared frequency resource, the bandwidth of the first data, the first threshold, a quantity K of clusters of data comprised in the first data, the quantity $N_f$ of frequency resources comprised in the first frequency resource set, or Q, wherein
the first threshold indicates an upper limit of a sum of bandwidths of overlapping frequency resources between the Q frequency resources.

26. The method according to claim 25, wherein the first frequency resource set and/or the first frequency position set are/is associated with the bandwidth of the shared frequency resource and the bandwidth of the first data; and
a ratio of the bandwidth of the shared frequency resource to the bandwidth of the first data is used to determine the first frequency resource set and/or the first frequency position set.

27. The method according to claim 25 or 26, wherein the first frequency resource set and/or the first frequency position set are/is associated with K; and

K satisfies:

$$K \leq P \leq N_{ratio},$$

wherein
$N_{ratio}$ represents the ratio of the bandwidth of the shared frequency resource to the bandwidth of the first data, and P represents a maximum prime number less than or equal to $N_{ratio}$.

28. The method according to claim 27, wherein the shared frequency resource comprises P * K sub-blocks, the first data comprises K clusters of data, bandwidths of any two of the K clusters of data are the same, and a bandwidth of each sub-block is the same as a bandwidth of each cluster of data; and
the first frequency resource comprises K clusters of frequency resources, the K clusters of frequency resources one-to-one correspond to K clusters of frequency positions, and the K clusters of frequency positions are positions of K sub-blocks in the P* K sub-blocks.

29. The method according to any one of claims 25 to 28, wherein

the first frequency position set $S_{set}$ satisfies:

$$S_{set} = \{S_0, \dots, S_{N_f-1}\},$$

wherein
$S_m$ represents an $m^{th}$ frequency position in the first frequency position set $S_{set}$, $m = 0, \dots, N_f - 1$, $S_m(k)$ represents a $k^{th}$ cluster of frequency positions in the $m^{th}$ frequency position, $k = 0, \dots, K - 1$, and $S_m(k)$ is related to the bandwidth of the shared frequency resource, the bandwidth of the first data, the first threshold, and the quantity K of clusters of data comprised in the first data.

30. The method according to claim 29, wherein

a $k^{th}$ cluster of frequency positions $S_{\sum_{l=0}^{L}(P^l * i_l)}(k)$ in a $\sum_{l=0}^{L}(P^l * i_l)^{th}$ frequency position in the first frequency position set $S_{set}$ satisfies:

$$S_{\sum_{l=0}^{L}(P^l * i_l)}(k) = k * P + (\sum_{l=0}^{L}(k^l * i_l)) \mathrm{mod}\, P,$$

or

$$X_{\sum_{l=0}^{L}(P^l * i_l)}(k) = k * P + \left(\sum_{l=0}^{L}(k^l * i_l)\right) \bmod P,$$

and

$$S_{\sum_{l=0}^{L}(P^l * i_l)}(k) = Y\left(X_{\sum_{l=0}^{L}(P^l * i_l)}(k)\right),$$

wherein

the $k^{th}$ cluster of frequency positions corresponds to a $k^{th}$ cluster of data in the K clusters of data comprised in the first data, P represents the maximum prime number less than or equal to the ratio $N_{ratio}$ of the bandwidth of the shared frequency resource to the bandwidth of the first data, L represents a ratio of the first threshold to a bandwidth of each cluster of data in the K clusters of data, K represents the quantity of clusters of data comprised in the first data, L is an integer and $0 \leq L \leq K - 1$, $i_l = 0, ..., P - 1$, $N_f = P^{L+1}$, $k = 0, ..., K - 1$, Y comprises P * K elements, a value of any one of the P * K elements is one of 0 to P * K - 1, and values of any two of the P * K elements are different.

31. A communication apparatus, comprising a module or a unit configured to perform the method according to any one of claims 1 to 18, or a module or a unit configured to perform the method according to any one of claims 19 to 30.

32. A communication apparatus, wherein the communication apparatus comprises a processor, the processor is coupled to a memory, the memory stores instructions, and when the instructions are run by the processor, the communication apparatus is enabled to perform the method according to any one of claims 1 to 18, or the communication apparatus is enabled to perform the method according to any one of claims 19 to 30.

33. A computer-readable storage medium, wherein the computer-readable storage medium is configured to store a computer program, and when the computer program is run on a computer, the computer is enabled to perform the method according to any one of claims 1 to 18, or the computer is enabled to perform the method according to any one of claims 19 to 30.

FIG. 1

FIG. 2

300

| Sending device | | Receiving device |

S310: Determine a first frequency resource corresponding to first data

S320: Determine the first frequency resource

S330: Send the first data on the first frequency resource

FIG. 3

FIG. 4

EP 4 716 341 A1

FIG. 5

FIG. 6

Communication apparatus 1000

Transceiver unit 1010

Processing unit 1020

FIG. 7

Communication apparatus 2000

Processor
2010

Memory
2030

Transceiver
2020

FIG. 8

Chip system 3000

Logic circuit 3010

Input/output interface 3020

FIG. 9

## INTERNATIONAL SEARCH REPORT

| International application No. |
|---|
| **PCT/CN2024/074451** |

| A. | CLASSIFICATION OF SUBJECT MATTER |
|---|---|

H04W 72/0453(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 资源, 频率, 带宽, 重叠, 重合, 部分, 阈值, 索引, 位置, resource, set, frequency, bandwidth, overlap, part, threshold, index, location

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108419293 A (HUAWEI TECHNOLOGIES CO., LTD.) 17 August 2018 (2018-08-17) description, paragraphs [0072]-[0174], and figures 5 and 6 | 1-10, 17-25, 31-33 |
| X | CN 115379566 A (HUAWEI TECHNOLOGIES CO., LTD.) 22 November 2022 (2022-11-22) description, paragraphs [0083]-[0213] | 1-10, 17-25, 31-33 |
| A | CN 106171024 A (HUAWEI TECHNOLOGIES CO., LTD.) 30 November 2016 (2016-11-30) entire document | 1-33 |
| A | US 2020128585 A1 (PANASONIC INTELLECTUAL PROPERTY CORPORATION OF AMERICA) 23 April 2020 (2020-04-23) entire document | 1-33 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **02 April 2024** | **24 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/074451**

| Patent document cited in search report | | | Publication date (day/month/year) | Patent family member(s) | | | Publication date (day/month/year) |
|---|---|---|---|---|---|---|---|
| CN | 108419293 | A | 17 August 2018 | None | | | |
| CN | 115379566 | A | 22 November 2022 | None | | | |
| CN | 106171024 | A | 30 November 2016 | None | | | |
| US | 2020128585 | A1 | 23 April 2020 | US | 11191105 | B2 | 30 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2023115432